# EUROPÄISCHE PATENTANMELDUNG

(11) **EP 2 551 055 A2**
(43) Veröffentlichungstag der Anmeldung: **30.01.2013**
(21) Anmeldenummer: 12177643.9
(22) Anmeldetag: 24.07.2012
(51) Int. Cl.: B24B 33/02, B24B 1/00, B23C 3/00, B23B 41/00

(54) **Verfahren und Bearbeitungsanlage zum Feinbearbeiten einer Kurbelwellenlagerbohrung**

(30) Priorität: 27.07.2011 DE 102011079900
(71) Anmelder: Nagel Maschinen- und Werkzeugfabrik GmbH, 72622 Nürtingen (DE); Grob-Werke GmbH & Co. KG, 87712 Mindelheim (DE)
(72) Erfinder: Nagel, Bernd, 72622 Nürtingen (DE); Mayer, Martin, 72636 Frickenhausen (DE); Wankmiller, German, 87671 Ronsberg (DE); Wassermann, Georg, 87761 Lauben (DE)
(74) Vertreter: Patentanwälte Ruff, Wilhelm, Beier, Dauster & Partner

(57) **Zusammenfassung**

Bei einem Verfahren zum Feinbearbeiten einer Kurbelwellenlagerbohrung (160) in einem Zylinderkurbelgehäuse (150) einer Brennkraftmaschine wird ausgehend von einer vorbereiteten Kurbelwellenlagerbohrung (160) eine fertig bearbeitete Kurbelwellenlagerbohrung (160) mit einem vorgebbaren Sollmaß, einer vorgebbaren Sollstruktur der Bohrungsinnenfläche und einer vorgebbaren Sollposition der Bohrungsachse erzeugt. Dazu wird die vorbereitete Kurbelwellenlagerbohrung (160) zunächst mit mindestens einem Feinbearbeitungswerkzeug (120) mit geometrisch bestimmter Schneide feinbearbeitet und anschließend wird eine Honbearbeitung der Kurbelwellenlagerbohrung (160) durchgeführt wird. Das Verfahren ist dadurch gekennzeichnet, dass bei einer der Honbearbeitung unmittelbar vorgeschalteten letzten Feinbearbeitungoperation mit geometrisch bestimmter Schneide ein Aufmass von mindestens 0.4 mm abgetragen wird, und dass das Honwerkzeug (270) koaxial zur Sollposition der Bohrungsachse in die Bohrung eingeführt und innerhalb der Bohrung (160) bewegt wird, wobei bei der Honbearbeitung ein Aufmass von mindestens 0.08 mm abgetragen wird. Das Verfahren ermöglicht es, Kurbelwellenlagerbohrungen unter Einhaltung höchster Anforderungen an die Bearbeitungspräzision wirtschaftlicher als bisher zu bearbeiten.

## Beschreibung

### HINTERGRUND UND STAND DER TECHNIK

Die Erfindung bezieht sich auf ein Verfahren zum Feinbearbeiten einer Kurbelwellenlagerbohrung in einem Zylinderkurbelgehäuse einer Brennkraftmaschine gemäß dem Oberbegriff von Anspruch 1. Weiterhin bezieht sich die Erfindung auf eine zur Durchführung des Verfahrens geeignete Bearbeitungsanlage gemäß dem Oberbegriff von Anspruch 13.

Das Zylinderkurbelgehäuse (ZKG), welches oft auch schlicht als "Kurbelgehäuse" oder "Motorblock" zu bezeichnet wird, ist integraler Bestandteil von Verbrennungsmotoren bzw. Brennkraftmaschinen, wie sie beispielsweise in Personen- oder Lastkraftwagen, Flugzeugen, Schiffen oder stationären Anlagen Einsatz finden. Die am weitesten verbreitete Bauform sind Mehrzylindermotoren, deren Kolben über Pleuel mit der rotierenden Kurbelwelle verbunden sind, die die vom Motor erzeugte Kraft an Räder, Schiffsschrauben, Propeller, Generatoren oder dergleichen weiterleitet.

Die Kurbelwelle liegt in Reihen- oder V-Motoren unterhalb, in einem Boxermotor zwischen den Zylindern und stützt sich am Zylinderkurbelgehäuse in den Lagerstellen der Kurbelwellenlagerbohrung ab. Die Lagerstellen sind in der Regel als Gleitlager, gegebenenfalls auch als Wälzlager ausgeführt. Um einen hohen Rundlauf der Kurbelwelle zu gewährleisten und damit unerwünschte Verschleißerscheinungen und Schwingungen im Betrieb zu minimieren, muss die Kurbelwelle hohen Formtoleranzanforderungen entsprechen. Auch die Lagerstellen sind hinsichtlich ihrer Größe und Lage im Zylinderkurbelgehäuse eng toleriert.

Die relativ engen Toleranzen der maßgebenden Teile eines Verbrennungsmotors und eines Zylinderkurbelgehäuses ergeben sich aus den komplexen Funktionen dieser Teile. Die Form, das Maß und die Oberflächentopografie der Zylinderbohrung bestimmen dabei maßgeblich den Verschleiß, die Reibung, den Ölverbrauch und die Emissionswerte des Verbrennungsmotors sowie, als Folge der Reibung, auch die Leistung und den Wirkungsgrad. Das komprimierte Brennraumvolumen bestimmt vor allem die Verdichtung des Motors. Diese hat Auswirkungen auf die Leistung und durch den Verbrennungsverlauf auch Einfluss auf die Emissionswerte sowie auf Motorgeräusche.

Die exakte Position der Kurbelwelle relativ zu den Kolben bzw. zu den Zylinderbohrungen ist unter anderem wichtig zur Verschleißminderung an den hoch belasteten Motorteilen. Das sind insbesondere Kolben/Kolbenbolzen, Pleuel sowie Lager des Pleuels auf der Kurbelwelle als auch die Lagerung der Kurbelwelle im Zylinderkurbelgehäuse. Bei der Position der Bohrungsachse spielt nicht nur die absolute Position im Raum, sondern auch ihre Winkellage bzw. Orientierung eine Rolle. Beispielsweise laufen bei Schaltgetrieben mit Kupplung die Kurbelwelle und die Eingangswelle des Getriebes gemeinsam. Daher ist hier eine Koaxialität der beiden Wellen entscheidend für eine hohe Lebensdauer.

Bei der Kurbelwellenlagerung ist auch die Koaxialität der Lagerstellen zueinander wichtig. Die Lagerstellen sollten möglichst gut in einer Flucht liegen, damit die Kurbelwelle rund laufen kann und an allen Lagerstellen im Wesentlichen gleichmäßig aufliegt.

Der Werkstückbereich um eine Kurbelwellenlagerbohrung setzt sich im Allgemeinen aus zwei Einzelteilen zusammen. Dies sind im häufigsten Fall die Lagerstege des Zylinderkurbelgehäuses einerseits und die darauf aufgeschraubten Lagerdeckel andererseits. Alternativ kann die Kurbelwellenlagerbohrung auch an der Schnittstelle zweier Zylinderkurbelgehäuse-Hälften liegen, wie z.B. beim Boxermotor. Die Einzelteile werden in der Regel im unmontierten Zustand vorbearbeitet, indem an den Lagerstegen des Zylinderkurbelgehäuses und an den Lagerdeckeln jeweils halbrunde Oberflächenabschnitte angefertigt werden. In einem nachfolgenden Prozessschritt werden die Einzelteile zusammengeschraubt, so dass sich aus den halbrunden Oberflächenabschnitten im Bereich einer Lagerstelle jeweils ein im Wesentlichen zylindrischer Bohrungsabschnitt ergibt. Mehrere in Reihe mit Abstand hintereinander liegende Bohrungsabschnitte ergeben dann die gesamte Kurbelwellenlagerbohrung.

Die auf diese Weise vorbereitete Bohrung wird dann einer mehrstufigen Feinbearbeitung unterzogen. Um die Toleranzen in der Fertigung von Zylinderkurbelgehäusen erzielen zu können, wird heutzutage in der Regel eine Kombination aus einer oder mehreren Bohroperationen und/oder Reiboperationen und einer oder mehreren nachfolgenden Honoperationen verwendet. Die Vielzahl der Operationen ist vorgesehen, da Ungleichmäßigkeiten, die beispielsweise vom Guss des Zylinderkurbelgehäuses herrühren, relativ große Abträge von mehreren Zehntelmillimetern oder mehr nötig machen, gleichzeitig aber auch Form- und Lagetoleranzen im unteren Mikrometerbereich liegen können und damit eine Hochpräzisionsbearbeitung erfordern.

Die Bearbeitungsstufen mit Hilfe von Werkzeugen mit geometrisch bestimmten Schneiden (Bohrwerkzeuge oder Reibwerkzeuge) haben dabei zwei wesentliche Aufgaben. Eine Aufgabe ist die Herstellung der Position der gesamten Kurbelwellenlagerbohrung in Bezug auf ein werkstückfestes Koordinatensystem, beispielsweise in Bezug auf eine entsprechende Bezugsfläche am Zylinderkurbelgehäuse. Mittels der Feinbearbeitung mit geometrisch bestimmten Schneiden wird also die für das Werkstück vorgegebene Sollposition der Bohrungsachse erzeugt. Die andere Aufgabe der Feinbearbeitung mittels Werkzeugen mit geometrisch bestimmten Schneiden besteht in der Positionierung der einzelnen Lagerstellen zueinander, was in Fachkreisen auch als "Koaxialität" der Kurbelwellenlagerbohrung bezeichnet wird. Die Abträge bezogen auf den Bohrungsdurchmesser liegen bei diesen Operationen insgesamt typischerweise im Bereich mehrerer Zehntelmillimeter, ggf. auch bei einem Millimeter oder darüber.

Nach der Feinbearbeitung mittels Werkzeugen mit geometrisch bestimmten Schneiden erfolgt eine Honbearbeitung der Kurbelwellenlagerbohrung, also eine Feinbearbeitung mit einem Werkzeug oder mehreren Werkzeugen mit geometrisch unbestimmten Schneiden. Durch das Honen wird vor allem die geforderte Endqualität hinsichtlich Durchmessertoleranz, Zylinderform und Oberflächenrauheit erzielt, so dass die Toleranzen hinsichtlich des vorgebbaren Sollmaßes und der vorgebbaren Sollstruktur der Bohrungsinnenfläche eingehalten werden.

Die Position und Koaxialität der Kurbelwellenlagerbohrung sollen beim Honen nicht verändert werden, da diese bereits durch die vorgeschalteten Operationen festgelegt wurden. Daher ist für das Honen eine gelenkige bzw. nachgiebige Kopplung zwischen Honwerkzeug und Honspindel vorgesehen, damit das Honwerkzeug der hinsichtlich ihrer Position bereits vorgegebenen Bohrung folgen kann, ohne aktiv deren Position zu verändern. Die Abträge bezogen auf den Bohrungsdurchmesser liegen bei der Honoperation typischerweise im Bereich von deutlich unterhalb von 100 µm.

Die EP 0 968 069 B2 beschreibt eine Bohrmaschine, die bei der Serienfertigung von Zylinderkurbelgehäusen zum Bohren der Kurbelwellenlagerbohrungen verwendbar ist.

Aus der DE 196 34 415 B4 ist ein Honwerkzeug bekannt, das beispielsweise beim Honen von Kurbelwellenlagerbohrungen oder anderen in Abschnitte untergliederten Bohrungen mit fluchtend in Reihe angeordneten Bohrungsabschnitten verwendet werden kann. Das Honwerkzeug hat mindestens einen vor Beginn der Bearbeitung entsprechend dem Sollmaß einstellbaren Honbereich, der einen Schneidbereich und einen Kalibrierbereich mit jeweils mindestens einem Schneidbelag aufweist, sowie einen Führungsschneidbereich mit mindestens einem Schneidbelag, wobei der Führungsschneidbereich radial aufweitbar ist.

### AUFGABE UND LÖSUNG

Es ist eine Aufgabe der Erfindung, ein Verfahren zur Feinbearbeitung von Kurbelwellenlagerbohrungen in Zylinderkurbelgehäusen sowie eine zur Durchführung des Verfahrens geeignete Vorrichtung bereitzustellen, mit denen Kurbelwellenlagerbohrungen unter Beibehaltung höchster Anforderungen an die Bearbeitungspräzision ausgehend von einer relativ groben Vorbereitung wirtschaftlicher als bisher feinbearbeitet werden können.

Zur Lösung dieser Aufgabe stellt die Erfindung ein Verfahren mit den Merkmalen von Anspruch 1 sowie eine Vorrichtung mit den Merkmalen von Anspruch 13 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Bei der Konfiguration gemäß der beanspruchten Erfindung können die Bearbeitungsoperationen der mehrstufigen Feinbearbeitung besser als bisher zusammenarbeiten. Die Schnittstelle zwischen den unterschiedlichen spanenden Bearbeitungsverfahren - einerseits mit geometrisch bestimmter Schneide (z.B. Feinbohren und/oder Reiben), andererseits mit geometrisch unbestimmten Schneiden (Honen) - wird optimiert. Unter anderem liegen die folgenden Überlegungen zugrunde.

Der Begriff "Honen" bezeichnet in dieser Anmeldung ein Zerspanungsverfahren mit geometrisch unbestimmten Schneiden, bei dem ein vielschneidiges Honwerkzeug eine aus zwei Komponenten bestehende Arbeitsbewegung ausführt, die zu einer charakteristischen Oberflächenstruktur der bearbeiteten Innenfläche führt, die meist, aber nicht zwingend, überkreuzte Bearbeitungsspuren hat. Die von einer Honspindel einer Honmaschine auf das Honwerkzeug übertragene Arbeitsbewegung besteht in der Regel aus einer axial hin- und hergehenden Hubbewegung und einer dieser überlagerten Drehbewegung.

Im Vergleich zu Werkzeugen, die mit geometrisch bestimmten Schneiden arbeiten (z.B. Bohrwerkzeugen) haben Honwerkzeuge eine erheblich höhere Standzeit, so dass größere Stückzahlen ohne Werkzeugwechsel bearbeitet werden können. Während bei Bohrwerkzeugen und Reibwerkzeugen ein Verschleiß der geometrisch bestimmten Schneiden zu einer allmählichen Veränderung der Eingriffsverhältnisse und damit zu einer Verschlechterung von Oberflächengüte und Formgenauigkeit führen kann, bleibt die Schneidleistung von Honwerkzeugen aufgrund des Selbstschärfungseffektes der mit gebundenen Schneidkörnern versehenen Schneidgruppen während der gesamten Standzeit im Wesentlichen konstant, so dass auch bei großen Stückzahlen bearbeiteter Werkstücke und relativ hoher Abtragsleistung pro Bohrung weitgehend gleichbleibende Qualitäten von Form und Oberflächenmikrostruktur erzielbar sind.

Eine Verlagerung eines Teils der Bearbeitungsaufgabe weg vom Feinbohren und/oder Reiben hin zum Honen kann somit ohne Qualitätseinbussen die Produktivität des Gesamtprozesses steigern.

Durch die Erfindung ergibt sich eine erhebliche Verkürzung der Prozesskette mit dem Potential für eine wesentlich wirtschaftlichere Durchführung der Feinbearbeitung.

Die Bearbeitungsoperationen mittels geometrisch bestimmter Schneiden können gröber, dafür aber effizienter als bisher arbeiten. Gegebenenfalls können einzelne Bearbeitungsstufen mittels geometrisch bestimmter Schneiden ganz entfallen. Beispielsweise kann bei manchen Verfahrensvarianten die sogenannte Finish-Feinborhrbearbeitung entfallen, die herkömmlich als letzte Bearbeitungsoperation einer mehrstufigen Feinbohrbearbeitung mit typischen Abträgen zwischen 40µm und 50µm (bezogen auf den Bohrungsdurchmesser) dafür ausgelegt war, die Bohrung so genau zu bearbeiten, dass die nachfolgenden Honbearbeitung zur Einstellung von Durchmessertoleranz, Zylinderform und Oberflächenstruktur nur sehr geringe Abträge (typischerweise zwischen 40µm und 60 µm) leisten musste.

Da die Honbearbeitung einen relativ hohen Materialabtrag leisten kann, kommt es weniger als bei herkömmlichen Verfahren darauf an, dass durch die Bearbeitung mittels geometrisch bestimmter Schneiden ein bestimmtes Endmass in engen Toleranzen eingehalten wird. Die Nachgeschaltete Honoperation ist in dieser Hinsicht "toleranter". Daher kann eine bei konventionellen Verfahren übliche Messoperation nach Abschluss der letzten Feinbearbeitung mittels geometrisch bestimmter Schneiden bzw. vor dem Beginn der Honbearbeitung entfallen und das Werkstück kann nach der letzten Feinbearbeitungoperation mit geometrisch bestimmter Schneide ohne Zwischenschaltung einer Messoperation gehont werden. Auch die entsprechende Messstation kann eingespart werden und ist dementsprechend bei bevorzugten Ausführungsformen von Bearbeitungsanlagen nicht vorhanden, so dass dort im Werkstückfluss zwischen der Bearbeitungsmaschine für die Bearbeitung mit geometrisch bestimmter Schneide und der Honmaschine keine gesonderte Messstation angeordnet ist.

Bei der beanspruchten Erfindung wird das Fertigungsverfahren "Honen" nicht nur zur Einstellung von Durchmessertoleranz, Zylinderform und Oberflächenstruktur genutzt, sondern die Honbearbeitung kann dort, wo es erforderlich ist, gleichzeitig eine Verbesserung der Koaxialität der Bohrung herbeiführen. Hierzu trägt zum einen die koaxial zur Bohrungsachse verlaufende hin- und Herbewegung des Honwerkzeugs und zum anderen der im Vergleich zu herkömmlichen Verfahren relativ hohe Abtrag bei.

In der Regel wird das Werkstück in einer Werkstückposition gehalten und das Honwerkzeug wird koaxial zur Sollposition der Bohrungsachse in die Bohrung eingeführt und innerhalb der Bohrung bewegt. Das Werkstück wird normalerweise zumindest gegen Abheben vom Werkstückhalter gesichert. Eventuell können bei manchen Verfahrensvarianten Bewegungsfreiheitsgrade um eine vertikale Achse zugelassen werden, damit keine ungewollten Zwangskräfte entstehen und sich das Werkstück am Honwerkzeug ausrichten kann. Bei anderen Varianten ist das Werkstück für die Honbearbeitung in einer Werkstückposition z.B. mittels Indexiereinsichtungen fixiert und hat dadurch eine Werkstückposition, die sich auch bei Einwirkung von Bearbeitungskräften nicht ändert.

Damit durch die Honbearbeitung die Position der Bohrungsachse nicht verändert wird, wenn sie bereits durch die vorgeschalteten Operationen richtig eingestellt wurde, und damit ggf. sogar durch axial und/oder in Umfangsrichtung ungleich verteilten Materialabtrag die Position noch korrigiert und vor allem die Koaxialität weiter verbessert werden kann, ist bei manchen Ausführungsformen eine exakte Festlegung der Position der Werkzeugachse (bezüglich Lage im Raum und Winkellage bzw. Orientierung) während des Honens vorgesehen. Dies kann durch eine radiale Führung des Honwerkzeugs erreicht werden. Konstruktiv kann das durch unterschiedliche Radialführungseinrichtungen erreicht werden.

Vorzugsweise wird das Honwerkzeug mit einer spindelseitigen Kupplungsstruktur starr an eine Honspindel oder an eine starr mit der Honspindel gekoppelte Antriebsstange angekoppelt und an mindestens einer mit axialem Abstand von der Kupplungsstruktur angeordneten Lagerstelle geführt, wobei zwischen der Kupplungsstruktur und der Lagerstelle mindestens eine Schneidgruppe des Honwerkzeugs angeordnet ist. Die auf diese Schneidgruppe wirkenden Radialkräfte können somit an beiden Seiten der Schneidgruppe aufgenommen werden, wodurch die Lage der Werkzeugachse im Bereich der Schneidgruppe auch bei starken Querkräften stabil bleibt. Gerade bei axial langen Bohrungen, z.B. mit einem Länge-Durchmesserverhältnis von deutlich mehr als 3 oder mehr als 4 oder mehr als 5 oder mehr als 6, hat sich diese Art der starren Führung der Axialbewegung bewährt.

Bei manchen Ausführungsformen wird ein spindelferner Endabschnitt des Honwerkzeugs an der der Eintrittseite der Bohrung gegenüber liegenden Austrittsseite in einem Gegenhalter drehbar gelagert. Diese Variante ist bei allen Werkstücken mit durchgehender Bohrung möglich. Der Gegenhalter kann bei einer axialen Hubbewegung des Honwerkzeugs mit dem Honwerkzeug mitbewegt werden, und zwar entweder passiv (ohne eigenen Verschiebungsantrieb) oder aktiv (mittels Verschiebungsantrieb). Bei einem mitbewegten Gegenhalter bleibt die Einspannlänge der Honwerkzeuges zwischen der spindelseitigen Kupplungsstruktur und dem Gegenhalter während der Hubbewegung konstant, was sich positiv auf die Bearbeitungsqualität auswirken kann. Es ist auch möglich, dass der Gegenhalter an einer maschinenfesten Position fixiert ist, so dass sich das Honwerkzeug während der Hubbewegungen relativ zum Gegenhalter bewegt. Solche Ausführungsformen sind konstruktiv besonders einfach, da auf Linearführungen und ggf. einen Antrieb für den Gegenhalter verzichtet werden kann.

Varianten mit Führungsstellen vor und hinter der Bohrung (vordere und hintere Führung) und/oder Varianten mit innerer Führung sind ebenfalls möglich.

Die Kurbelwellenlagerbohrung ist ein Beispiel für eine axial relativ lange Bohrung, die mehrere Bohrungsabschnitte hat, die miteinander fluchtend und in gegenseitigem Abstand zueinander in Reihe angeordnet sind. Bei derartigen Werkstücken ist es möglich, dass mindestens eine Werkzeuglagerung für das Honwerkzeug zwischen zwei benachbarten Bohrungsabschnitten liegt. Bei manchen Ausführungsformen ist eine solche "innere Führung", d.h. eine Werkzeugführungseinrichtung im Inneren des Werkstücks zwischen zwei benachbarten Bohrungsabschnitten, und somit zwischen Bohrungseintritt und Bohrungsaustritt, vorgesehen. Der axiale Abstand zwischen den Lagerstellen für das Honwerkzeug kann auf diese Weise kurz gehalten werden, wodurch eine gegen Querkräfte besonders stabile Lagerung bzw. Führung erreicht und eine Durchbiegung des Honwerkzeugs zwischen Lagerstellen verhindert oder vermindert werden kann.

Bei einer für eine innere Führung geeigneten Variante hat eine als Führungseinrichtung dienende Werkzeuglagerung ein maschinenfest fixierbares Lagerelement, an oder in welchem ein gegenüber diesem Lagerelement frei drehbares Führungselement drehbar gelagert ist, welches sich im Betrieb mit dem hindurchgeführten, sich drehenden Honwerkzeug mitdreht und dieses führt und gegen Radialkräfte abstützt. Das drehbare Führungselement kann mindestens ein Mitnehmerelement aufweisen, das zum (in Umfangsrichtung formschlüssigen) Eingriff in eine am Werkzeugkörper des Honwerkzeugs vorgesehene Ausnehmung vorgesehen ist, so dass das Führungselement als passives Element (ohne eigenen Antrieb) einfach und robust ausgeführt werden kann. Am Innenumfang des Führungselementes können axial durchgehende Aussparungen vorgesehen sein, durch die hindurch die am Honwerkzeug angebrachten Schneidelemente (z.B. Honleisten) ohne Berührungskontakt hindurchpassen.

Die Innere Führung kann auch in Verbindung mit einem Gruppenwerkzeug sinnvoll sein, bei dem an einem Werkzeugkörper mehrere mit axialem Abstand zueinander angeordnete Schneidgruppen zur gleichzeitigen Honbearbeitung mehrerer in axialem Abstand zueinander angeordneter Bohrungsabschnitte angeordnet sind, wobei die Anzahl der Schneidgruppen vorzugsweise der Anzahl der gleichzeitig zu bearbeitenden Bohrungsabschnitte entspricht. Ein Gruppenwerkzeug für einen Vierzylinder-Reihenmotorblock kann z.B. fünf Schneidgruppen für die fünf Lagerstellen haben. Eine innere Werkzeuglagerung kann dann zwischen zwei Schneidgruppen am Werkzeugkörper angreifen. Es können zwei oder mehr innere Werkzeuglagerungen vorgesehen sein, z.B. eine für jeden Zwischenraum zwischen Schneidgruppen.

Als Alternative zu einer radialen Führung des Honwerkzeug durch externe Radialführungseinrichtungen kann es in manchen Fällen auch ausreichen, das Honwerkzeug starr an die Honspindel oder eine entsprechend steife Antriebsstange zu koppeln und die gesamte Anordnung derart steif auszulegen, dass höchstens eine sehr geringe seitliche Abdrängung vorkommen kann.

Bei den Honverfahren kann man zwischen dem klassischen Honen und dem sogenannten Dornhonen unterscheiden. Beim klassischen Honen werden Honwerkzeuge mit während des Honens radial zustellbaren Schneidgruppen verwendet, um durch eine Vielzahl von Hüben allmählich das gewünschte Sollmass der Bohrung zu erreichen. Beim Dornhonen wird dagegen ein auf Sollmass (Fertigmass) voreingestelltes Dornhonwerkzeug verwendet, welches üblicherweise einen konischen Schneidbereich und einen sich daran anschließenden, ebenfalls schneidenden, zylindrischen Kalibrierbereich hat. Der gesamte Abtragsvorgang erfordert beim Dornhonen in der Regel nur einen oder wenige, z.B. maximal drei, Doppelhübe. Beide Honverfahren können im Rahmen der vorliegenden alternativ oder in Kombination Erfindung genutzt werden.

Ein Charakteristikum der Honbearbeitung ist der im Vergleich zum konventionellen Honen starke Materialabtrag, der ggf. auch die Korrektur bzw. Verbesserung der Koaxialität ermöglicht. Der an den Bohrungsabschnitten der Kurbelwellenlagerbohrung tatsächlich erforderliche Abtrag hängt von der Vorbereitung ab und kann von Bohrungsabschnitte zu Bohrungsabschnitt eines Werkstücks sowie von Werkstück zu Werkstück einer Serie variieren. Häufig wird zumindest an einem oder mehreren Bohrungsabschnitten und/oder Werkstücken einer Serie ein Abtrag von mindestens 100 µm erzeugt, wobei der Abtrag insbesondere auch zwischen 200 µm und 500 µm liegen kann. Bei besonders gut mittels geometrisch bestimmter Schneiden vorbearbeiteten Werkstücken oder Werkstückabschnitten kann der Abtrag auch weniger als 200 µm oder weniger als 100 µm betragen.

Um eine wirtschaftliche Feinbearbeitung innerhalb kurzer Taktzeiten zu ermöglichen, wird bei manchen Verfahrensvarianten während der Leistungshonbearbeitung mindestens phasenweise mittels geometrisch unbestimmte Schneiden Material mit einem Zeitspanvolumen Q_{W} = V/t abgetragen, das deutlich größer ist als beim konventionellen Honen. Hierbei ist V das durch Zerspanung abgetrennte Volumen des Werkstücks und t die dafür benötigte Bearbeitungszeit, so dass sich als Dimension [mm³/s] ergibt. Für das Volumen V gilt die Näherung V ≈ (π (D² - d²) L) / 4, wobei d der (kleinere) Durchmesser der Bohrung vor dem Abtrag, D der (größere) Durchmesser nach dem Abtrag und L die Länge der bearbeiten Bohrung bzw. des im Durchmesser vergrößerten Bohrungsabschnitts ist.

Um eine Vergleichbarkeit von Zahlenwerten zu erreichen, wird das Zeitspanvolumen in dieser Anmeldung auf eine Bearbeitungszeit t = 20 s (entsprechend einer typischen Honzeit) und eine Länge L = 20 mm (entsprechend einer typischen Stegbreite eines einzelnen Lagerstegs einer Kurbelwellenlagerbohrung eines PKW-Motors) bezogen. Das auf diese Weise normierte Zeitspanvolumen wird in dieser Anmeldung als "spezifisches" Zeitspanvolumen bezeichnet und mit Q_{W}^{S} abgekürzt.

Betrachtet man nun typische Bohrungen mit Nominaldurchmessern aus dem Bereich von 40 mm bis 70 mm, so liegt das spezifische Zeitspanvolumen vorzugsweise bei mehr als 13 mm³/s (für 40 mm) bzw. mehr als 22 mm³/s (für 70 mm). Diese typischen Untergrenzen werden in der Regel deutlich überschritten. Bei einem Nominaldurchmesser 40 mm kann z.B. Q_{W}^{S} > 30 mm³/s, gelegentlich auch Q_{W}^{S} > 50 mm³/s oder sogar Q_{W}^{S} > 100 mm³/s gelten. Bei einem Nominaldurchmesser 70 mm kann z.B. Q_{W}^{S} > 50 mm³/s, gelegentlich auch Q_{W}^{S} > 100 mm³/s oder sogar Q_{W}^{S} > 150 mm³/s gelten.

Hohe Zeitspanvolumina können u.a. durch unkonventionell hohe Schnittgeschwindigkeiten gefördert werden, welche wiederum von der Drehgeschwindigkeit (Drehzahl) und/oder der Hubgeschwindigkeit des Honwerkzeuges abhängen.

Bei manchen Verfahrensvarianten wird das Honwerkzeug während der Leistungshonbearbeitung mindestens phasenweise mit einer Drehzahl von mehr als 400 U/min gedreht wird, wobei die Drehzahl vorzugsweise mindestens phasenweise mehr als 1000 U/min, insbesondere mehr als 1500 U/min beträgt. Häufig liegt die Drehzahl im Bereich von 1500 U/min bis 2500 U/min.

Alternativ oder zusätzlich kann das Honwerkzeug beim klassischen Honen (mit aufweitbarem Honwerkzeug) während der Leistungshonbearbeitung mindestens phasenweise mit einer maximalen Hubgeschwindigkeit von mehr als 20 m/min bewegt werden, wobei die maximale Hubgeschwindigkeit vorzugsweise mindestens phasenweise zwischen 30 m/min und 50 m/min liegt oder sogar mehr als 50 m/min beträgt. Beim Dornhonen (mit voreingestelltem Werkzeug) können maximale Hubgeschwindigkeiten von mehr als 12 mm/min, insbesondere mehr als 20 m/min erreicht werden.

Der Spindelantrieb der Honmaschine ist dann hinsichtlich maximaler Drehzahl, maximaler Hubgeschwindigkeit und Antriebsleistung entsprechend ausgelegt.

Eine spezielle Auslegung der Schneidmittel kann die Erreichung hoher Abtragsraten bzw. Zeitspanvolumina und anderer Bearbeitungskriterien begünstigen. Beispielsweise kann es günstig sein, relativ lange Schneidleisten zu verwenden. Bei manchen Ausführungsformen wird ein Honwerkzeug verwendet, das mehrere um einen Werkzeugkörper verteilte Schneidleisten aufweist, wobei eine Länge der Schneidleisten mehr als 60%, insbesondere mehr als 80% der axialen Bohrungslänge beträgt. Alternativ oder zusätzlich kann die Länge der Schneidleisten mehr als das Dreifache oder mehr als das Vierfache oder mehr als das Fünffache des wirksamen Durchmessers des Honwerkzeugs betragen. Für die Bearbeitung typischer Kurbelwellenlagerbohrungen, z.B. mit Durchmessern im Bereich von 40 mm bis 70 mm, kann die Schneidleistenlänge z.B. bei 200 mm oder darüber liegen, z.B. zwischen 300 mm und 400 mm. Bei Verwendung relativ langer Schneidleisten können bei Honwerkzeugen mit radial zustellbaren Schneidleisten große Bereiche der Bohrung gleichzeitig bearbeitet werden. Bei Verwendung konischer Schneidleisten (Dornhonen) kann in einem einzigen Arbeitshub eine große Durchmesseränderung herbeigeführt werden. Relativ lange Schneidleisten sind auch im Hinblick auf die Geradheit der erzeugten Bohrung in der Regel günstig.

Bei der Honbearbeitung werden bevorzugt relativ grobkörnige Schneidmittel verwendet, insbesondere solche mit sehr harten Schneidkörnern, z.B. mit Diamant-Schneidkörnern. Häufig werden mittlere Korngrößen aus dem Bereich zwischen ca. 50 µm und ca. 150 µm (bei Diamantleisten z.B. von D54 bis D151) vorteilhaft sein, um einen guten Kompromiss zwischen hoher Abtragsleistung und gleichzeitig ausreichend feiner Oberflächenstruktur der bearbeiteten Innenflächen nach Abschluss der Honbearbeitung zu erhalten.

Vorzugsweise wird die Honbearbeitung einstufig durchgeführt. In der Prozesskette gibt es dann nur eine einzige Honoperation, die die Feinbearbeitung abschließt. Dadurch kann die Gesamt-Bearbeitungszeit kurz gehalten werden. Eine mehrstufige Honbearbeitung ist zwar möglich, in der Regel aber nicht erforderlich.

Die der Honoperation unmittelbar vorgeschaltete letzte Feinbearbeitungsoperation, bei der ein Werkzeug mit einer oder mehreren geometrisch bestimmten Schneiden eingesetzt wird, kann in Abhängigkeit vom Gesamtprozess und vom Werkstück unterschiedlich ausgestaltet sein.

Bei manchen Verfahrensvarianten wird als letzte Feinbearbeitungsoperation mit geometrisch bestimmter Schneide eine Reiboperation mittels eines Reibwerkzeugs durchgeführt. Der Begriff "Reiben" bezeichnet hier ein spanabhebendes Feinbearbeitungsverfahren, bei dem eine bestehende Bohrung, die über eine sogenannte Reibzugabe verfügt, mit Hilfe eines Reibwerkzeugs aufgebohrt wird. Die Reibzugabe ist in der Regel so bemessen, das einerseits eine Mindestspanungsdicke gegeben ist, andererseits aber keine zu große Spanabnahme erfolgt, die zu einer Überlastung des Reibwerkzeugs und/oder des Werkstücks führen könnte. Da beim Reiben nur ein einmaliger Spanungsgang durchgeführt wird, entspricht die Reibzugabe der Spanungsdicke bzw. der Schnitttiefe. Diese ist typischerweise relativ gering und kann z.B. bei Varianten des Verfahrens je nach Werkstoff und Bohrungsdurchmesser z.B. zwischen 0.4 mm und 0.8 mm liegen. Gegebenenfalls kann in einzelnen Fällen der Materialabtrag auch geringer sein, z.B. nur 0.2 mm oder mehr.

Die Reiboperation ist weiterhin dadurch gekennzeichnet, dass das Reibwerkzeug in der bereits bearbeiteten Bohrung exakt geführt wird. Hierzu sind am Reibwerkzeug ein oder mehrere Führungselemente oder Führungsabschnitte vorgesehen. Ein Reibwerkzeug kann als Einschneidenreibwerkzeug mit nur einer einzigen geometrisch bestimmten Schneide oder als mehrschneidiges Reibwerkzeug mit zwei oder mehr geometrisch bestimmten Schneiden ausgeführt sein.

Besonders vorteilhaft sind in der Regel Reibwerkzeuge, bei denen für den Materialabtrag, d.h. für die Zerspanungsfunktion, und für die Führungsfunktion innerhalb der Bohrung unterschiedliche Elemente vorgesehen sind. Beispielsweise können zusätzlich zu einer oder mehreren Werkzeugschneiden eine oder mehrere nicht-schneidende Führungsleisten vorgesehen sein. Eine Trennung von Zerspanungsaufgaben und Führungsaufgaben erlaubt es, die Schneiden dieser Werkzeuge bei Bedarf einfach auszutauschen und/oder exakt einzustellen.

Als Alternative zu einer Reiboperation kann als letzte Feinbearbeitungsoperation mit geometrisch bestimmter Schneide eine Feinbohroperation mit Hilfe eines Feinbohrwerkzeugs vorgesehen sein. Der Materialabtrag liegt dabei vorzugsweise in der Größenordnung des Materialabtrags herkömmlicher Semi-Finishbearbeitungen, also beispielsweise zwischen ca. 0.4 mm und ca. 0.5 mm. Gegebenenfalls kann in einzelnen Fällen der Materialabtrag auch geringer sein, z.B. nur 0.2 mm oder mehr im Durchmesser.

Die letzte Feinbearbeitungsoperation mit geometrisch bestimmter Schneide kann als einseitige Bearbeitung ausgelegt sein, bei der nur von einer Seite der zu bearbeitenden Kurbelwellenlagerbohrung ein Bearbeitungswerkzeug eingeführt wird.

Bei anderen Verfahrensvarianten wird dagegen die letzte Feinbearbeitungsoperation mit geometrisch bestimmter Schneide als zweiseitige Bearbeitung durchgeführt, wobei von jedem Bohrungsende der Kurbelwellenlagerbohrung ein Kurzwerkzeug eingeführt wird, das eine Bearbeitungslänge hat, die kürzer als die Bohrungslänge der Kurbelwellenlagerbohrung ist. Das Kurzwerkzeug ist in der Regel starr an eine Bearbeitungsspindel der zugehörigen Bearbeitungsmaschine angekoppelt und aufgrund seiner geringen Auskragung gegen quer zur Rotationsachse wirkende Querkräfte aufgrund seiner kompakten Länge sehr stabil, so dass keine externe Führung notwendig ist.

Ein Kurzwerkzeug hat vorzugsweise eine Bearbeitungslänge, die zwischen 50% und 80% der Bohrungslänge der Kurbelwellenlagerbohrung liegt. In der Regel werden mit einem Kurzwerkzeug nicht alle Bohrungsabschnitte bearbeitet, jedoch mindestens die Hälfte der Bohrungsabschnitte. So können beispielsweise bei einem Vierzylinder-Zylinderblock mit fünf Lagerstegen bzw. Bohrungsabschnitten jeweils nur drei von fünf oder vier von fünf Lagerstegen bearbeitet werden. Bei einem Motorblock für einen Dreizylindermotor können beispielsweise zwei oder drei von insgesamt vier Lagerstegen bei der Bearbeitung mit einem von einer Seite eingeführten Kurzwerkzeug bearbeitet werden.

Wenn das Kurzwerkzeug exakt koaxial zur Bearbeitungsspindel eingespannt ist und die Drehachse der Bearbeitungsspindel koaxial zur Sollposition der Bohrungsachse liegt, dann werden durch eine zweiseitige Bearbeitung in der Regel zumindest die an den jeweiligen Bohrungseintritten liegenden Endstege mit einer innerhalb der Toleranzen liegenden exakten Position gefertigt. Außerhalb der Toleranzen liegende Abweichungen von der exakten Bohrungsposition können sich allenfalls bei weiter innen liegenden Bohrungsabschnitten ergeben. Diese Abweichungen tragen zwar zur Verschlechterung der Koaxialität bei, können jedoch durch die nachgeschaltete Honoperation zuverlässig korrigiert werden.

Die zweiseitige Bearbeitung kann auf unterschiedliche Weise erfolgen. Es ist beispielsweise möglich, zwei Bearbeitungsmaschinen mit einander zugewandten Bearbeitungsspindeln vorzusehen, deren Drehachsen koaxial verlaufen. Die Kurbelwellenlagerbohrung eines zwischen den Bearbeitungsspindeln positionierten Werkstücks kann dann gleichzeitig von beiden Seiten bearbeitet werden.

Bei anderen Varianten, die unter anderem aus Kostengründen vorteilhaft sein können, wird bei der zweiseitigen Bearbeitung des Werkstücks zwischen einer ersten Bearbeitung (vom ersten Bohrungsende) und einer zweiten Bearbeitung (vom gegenüberliegenden zweiten Bohrungsende) um 180° gedreht. Hier reicht dann eine einzige einseitig angeordnete Bearbeitungsspindel, wobei die zwei Bearbeitungen dann am Werkstück nacheinander durchgeführt werden.

Bei manchen Verfahrensvarianten ist die zweiseitige Bearbeitung als Feinbohrbearbeitung ausgelegt, wobei als Kurzwerkzeug ein Feinbohrwerkzeug verwendet wird.

Bei anderen Verfahrensvarianten ist die zweiseitige Bearbeitung als Reiboperation ausgelegt, wobei dann als Kurzwerkzeug ein Reibwerkzeug verwendet wird.

Da in der Regel zumindest die Positionen der an der Bohrung liegenden Endstege bei einer zweiseitigen Bearbeitung im Rahmen der Toleranzen exakt vorgegeben werden können, kann insbesondere bei dieser Verfahrensvariante die Position der Kurbelwellenlagerbohrung durch eine Feinbearbeitungsoperation mit geometrisch bestimmter Schneide sichergestellt werden. Die anschließende Honbearbeitung muss in diesem Fall nicht positionsverändernd bzw. positionskorrigierend ausgelegt sein, sondern kann auf die Verbesserung der Koaxialität der Bohrungsabschnitt sowie auf die Einhaltung der Durchmessertoleranzen und Oberflächengüten optimiert werden.

Als Alternative zu einer zweiseitigen Bearbeitung ist bei manchen Verfahrensvarianten vorgesehen, dass die letzte Feinbearbeitungsoperation mit geometrisch bestimmter Schneide mittels eines Gruppenwerkzeugs durchgeführt wird, bei dem an einem Werkzeugkörper mehrere mit axialem Abstand zueinander angeordnete Schneidgruppen zur gleichzeitigen Bearbeitung mehrerer in axialem Abstand zueinander angeordneter Bohrungsabschnitte der Kurbelwellenlagerbohrung angeordnet sind. Normalerweise entspricht die Anzahl der Schneidgruppen dabei der Anzahl der gleichzeitig zu bearbeitenden Bohrungsabschnitte.

Jede Schneidgruppe kann eine oder mehrere geometrisch bestimmte Schneiden aufweisen. Es können feste und/oder einstellbare und/oder aussteuerbare Schneiden vorgesehen sein.

Da ein Gruppenwerkzeug entsprechend der relativ großen Länge der Kurbelwellenlagerbohrung eine bezogen auf seinen Durchmesser relativ große Werkzeuglänge hat, besteht die Gefahr eines seitlichen Ausweichens des Gruppenwerkzeugs. Daher ist bei bevorzugten Ausführungsformen vorgesehen, dass ein spindelferner Endabschnitt des Gruppenwerkzeugs an einer der Eintrittsseite der Kurbelwellenlagerbohrung gegenüberliegenden Austrittsseite in einem Gegenhalter drehbar gelagert wird, wobei der Gegenhalter vorzugsweise bei einer axialen Hubbewegung des Gruppenwerkzeugs mit dem Gruppenwerkzeug mit bewegt wird.

Insbesondere bei Verwendung eines gegengelagerten Gruppenwerkzeugs kann durch die Feinbearbeitung mittels geometrisch bestimmter Schneiden die vorbereite Kurbelwellenlagerbohrung ggf. in einer einzigen Bearbeitungsoperation so weit bearbeitet werden, dass einerseits die in der Regel notwendige Egalisierung nach dem Zusammenbau des Werkstücks und andererseits die Feinbearbeitung bis auf ein für einen Honabtrag geeignetes Aufmass in einer einzigen Bearbeitungsoperation durchgeführt werden kann.

Um sicherzustellen, dass jeder der Bohrungsabschnitte nach der Bearbeitung mit einem Gruppenwerkzeug nach Abschluss der Feinbohrbearbeitung ein Untermaß hat, welches durch die nachfolgende Honoperation zuverlässig abgetragen werden kann, ist bei Verwendung eines Gruppenwerkzeuges vorzugsweise eine Messoperation nachgeschaltet, bei der jeder Bohrungsabschnitt gesondert auf Einhaltung der für die nachfolgende Honoperation geltenden Eingangsparameter (insbesondere Durchmesser) überprüft wird. Hierdurch kann vermieden werden, dass beispielsweise bei einem Werkzeugbruch bei einer der Schneidgruppen ein Bohrungsabschnitt mit einem zu geringen Durchmesser verbleibt, der beim Einführen des Honwerkzeuges dazu führen könnte, dass das Honwerkzeug und/oder das Werkstück beschädigt werden. Gegebenenfalls reicht eine einfache Gebohrt-Kontrolle aus.

Die Erfindung betrifft auch eine zur Durchführung des Verfahrens geeignete Bearbeitungsanlage zum Feinbearbeiten einer Kurbelwellenlagerbohrung in einem Zylinderkurbelgehäuse einer Brennkraftmaschine, mit mindestens einer Bearbeitungsmaschine mit einer Bearbeitungsspindel, an die ein Feinbearbeitungswerkzeug mit geometrisch bestimmter Schneide angekoppelt oder ankoppelbar ist, sowie mit einer Honmaschine mit einer durch einen Spindelantrieb antreibbaren Honspindel, an die ein Honwerkzeug angekoppelt oder ankoppelbar ist. Die Bearbeitungsanlage ist zur Durchführung des in dieser Anmeldung beschriebenen des Verfahrens konfiguriert .

Vorzugsweise ist das Honwerkzeug direkt oder unter Zwischenschaltung einer starren Antriebsstange starr an die Honspindel angekoppelt oder ankoppelbar und die Lagereinrichtung ist dafür eingerichtet, an einer mit axialem Abstand von einer spindelseitigen Kupplungsstruktur des Honwerkzeuges angeordneten Lagerstelle derart an dem Honwerkzeug anzugreifen, dass zwischen der Kupplungsstruktur und der Lagerstelle mindestens eine Schneidgruppe oder ein Abschnitt einer Schneidgruppe des Honwerkzeugs angeordnet ist. Eine vordere und/oder eine hintere Führung und/oder eine innere Führung können vorgesehen sein.

Das Verfahren könnte auch auf einem entsprechend eingerichteten Bearbeitungszentrum ausgeführt werden.

Die vorstehenden und weitere Merkmale gehen außer aus den Ansprüchen auch aus der Beschreibung und den Zeichnungen hervor. Dabei können die einzelnen Merkmale jeweils für sich alleine oder zu mehreren in Form von Unterkombinationen bei einer Ausführungsform der Erfindung und auf anderen Gebieten verwirklicht sein und vorteilhafte Ausführungsformen darstellen. Bevorzugte Ausführungsformen werden an Hand der beigefügten Zeichnungen erläutert.

### KURZBESCHREIBUNG DER ZEICHNUNGEN

- Fig. 1: zeigt eine schematische Draufsicht auf einen Teil einer Ausführungsform einer Bearbeitungsanlage zum Feinbearbeiten von Kurbelwellenlagerbohrungen in Zylinderkurbelgehäusen von Brennkraftmaschinen
- Fig. 2A: zeigt eine schematische Seitenansicht einer Horizontal-Honmaschine zur Honbearbeitung von Kurbelwellenlagerbohrungen;
- Fig. 2B bis D: zeigen verschiedene Ansichten eines Motorblocks mit Kurbelwellenlagerbohrung;
- Fig. 3: zeigt eine schematische Seitenansicht der Bearbeitung einer Kurbelwellenlagerbohrung mit einem endseitig gegengelagerten Dornhonwerkzeug mit konischem Schneidbereich;
- Fig. 4: zeigt eine schematische Seitenansicht einer Anordnung mit einem in einer vorderen und einer hinteren Führung gelagerten Honwerkzeug, das mittels einer Antriebsstange an der Honspindel befestigt ist;
- Fig. 5: zeigt eine schematische Seitenansicht einer Anordnung mit einem direkt starr mit der Honspindel gekoppelten, mit durchgehenden Schneidleisten ausgestatteten Honwerkzeug, das im Inneren des Werkstücks zwischen benachbarten Lagerstegen mittels einer inneren Führung drehbar gelagert ist; und
- Fig. 6: zeigt ein Beispiel für eine zweiseitige Feinbohrbearbeitung unmittelbar vor der Honoperation.

### DETAILLIERTE BESCHREIBUNG BEVORZUGTER

### AUSFÜHRUNGSFORMEN

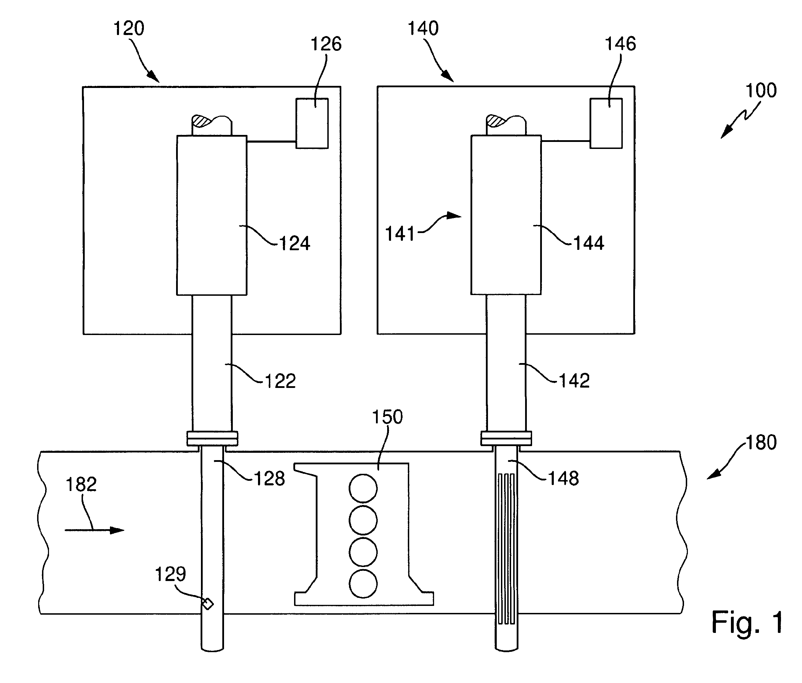

In Fig. 1 ist eine schematische Draufsicht auf einen Teil einer Ausführungsform einer Bearbeitungsanlage 100 zum Feinbearbeiten von Kurbelwellenlagerbohrungen in Zylinderkurbelgehäusen von Brennkraftmaschinen gezeigt. Die gesamte, hier nur zum Teil dargestellte Bearbeitungsanlage ist für eine Komplett-Feinbearbeitung der Kurbelwellenlagerbohrung unmittelbar im Anschluss an den Zusammenbau der die Kurbelwellenlagerbohrung bildenden Einzelteile des Motorblocks eingerichtet.

Ein zu bearbeitendes Werkstück 150 ist im Beispielsfall ein Zylinderkurbelgehäuse für einen Reihen-Vierzylindermotor. Der dargestellte Ausschnitt einer Fertigungslinie zur Komplettbearbeitung dieser Werkstücke zeigt eine als Feinbohrmaschine ausgelegte Bearbeitungsmaschine mit einer Feinbohreinrichtung 120 sowie eine in Materialflussrichtung 182 nachgeschaltete Honmaschine mit einer Honeinrichtung 140. Die Feinbohreinrichtung 120 und die Honeinrichtung 140 sind hier auf getrennten Maschinenbetten vorgesehen, sie können auch auf einem gemeinsamen Maschinenbett angeordnet sein. Eine Transfereinrichtung 180 dient dem Transfer der Werkstücke in Materialflussrichtung 182.

Die Feinbohreinrichtung 120 umfasst eine Feinbohrspindel 122, deren starr geführte Spindelachse im Wesentlichen horizontal ausgerichtet ist. Die Feinbohrspindel kann mit Hilfe eines Spindelantriebs 124 horizontal bewegt und um die Spindelachse gedreht werden. An das freie Ende der Feinbohrspindel ist ein Feinbohrwerkzeug 128 starr angekoppelt, an dessen Umfang eine aus Hartmetall bestehende Schneidplatte 129 angebracht ist, die als Bohrerspitze bzw. Schneide dient.

Die Axialbewegung und die Rotationsbewegung der Feinbohrspindel sowie die Zustellung der Schneide werden über eine Feinbohr-Steuereinheit 126 gesteuert. Bei typischen Feinbohroperation wird mit Drehzahlen zwischen ca. 1000 und ca. 3000 U/min und Vorschubgeschwindigkeiten zwischen ca. 200 und ca. 1400 m/min gearbeitet. Typische Schnitttiefen (Materialabtrag) bezogen auf den Durchmesser liegen normalerweise zwischen 0,3 mm und 1 mm. Abweichungen von diesen typischen Parameterbereichen sind in Ausnahmefällen möglich.

Mit Hilfe einer Verstelleinrichtung kann die radiale Position der Schneide verstellt und damit u.a. der Durchmesser der feinzubohrenden Bohrung festgelegt werden. Das Feinbohrwerkzeug hat also eine oder mehrere aussteuerbare Schneide(n). Die Verstelleinrichtung kann z.B. einen im Inneren den Feinbohrwerkzeugs angeordneten Konus aufweisen, der über eine durch die Feinbohrspindel 122 geführte Zustellstange axial verschiebbar ist. Die schräge Mantelfläche des Konus wirkt auf schräge Innenseiten von Werkzeughaltern, die radial verschiebbar im Körper des Feinbohrwerkzeugs geführt sind und jeweils eine auswechselbare Schneidplatte trägt. Durch diese Anordnung ist die radiale Position der Schneide 129 und damit der wirksame Durchmesser des Feinbohrwerkzeugs im Betrieb der Feinbohreinrichtung als Reaktion auf Steuersignale der Feinbohr-Steuereinheit 126 kontinuierlich oder schrittweise veränderbar. Bei Werkzeugverschleiss kann die Schneidplatte nachgestellt werden, so dass sich trotz Werkzeugverschleiss keine signifikante Verschlechterung der Bohrungsqualität, insbesondere des Bohrungsdurchmessers ergibt (Verschleisskompensation).

Die Feinbohrspindel der Feinbohreinheit 120 und das daran befestigte Feinbohrwerkzeug sind dafür eingerichtet, eine positions- und winkelbestimmende Semi-Finishbearbeitung durchzuführen. Typische Materialabträge liegen bei mehr als 0.4 mm (bezogen auf den Durchmesser). Gegebenenfalls können in einzelnen Fällen auch geringere Materialabträge, z.B. ab 0.2 mm, vorgesehen sein. Die gezeigte Feinbohreinrichtung ist die letzte Feinbohrstation der Prozesskette unmittelbar vor dem Transfer der Werkstücke zur Honeinrichtung 140. An der Feinbohreinrichtung 120 wird somit die letzte spanabhebende Feinbearbeitung mit geometrisch bestimmter Schneide durchgeführt.

Im Werkstückfluss vor dieser Feinbohreinrichtung gibt es nur noch eine einzige weitere Feinbohreinheit, nämlich eine (nicht dargestellte) Grobbohreinheit, welche für eine Grobbearbeitung (typische Materialabträge zwischen 2 mm und 8 mm) eingerichtet ist. Der Prozess kann so ausgelegt sein, dass die Bohrung nach Abschluss der letzten Feinbohrbearbeitung ein Untermaß im Bereich von 100 - 400 µm, vorzugsweise im Bereich von 0,2 mm +/- 0,05 mm im Durchmesser hat.

Die einspindlige Honeinrichtung 140 hat eine Honeinheit 141. Diese weist eine horizontale Honspindel 142 auf, die über einen Spindelantrieb 144 so angetrieben wird, dass die Honspindel bei der Honbearbeitung horizontal oszillierende Arbeitsbewegungen ausführt, denen eine Rotationsbewegung um die horizontale Drehachse überlagert ist. Eine Honsteuereinheit 146 steuert die Arbeitsbewegungen der Honspindel.

Am freien Ende der Honspindel 142 ist ein Honwerkzeug 148 starr angekoppelt, mit dem unmittelbar im Anschluss an die letzte Feinbohroperation nach dem Transfer des Werkstücks von der Feinbohreinrichtung zur Honeinrichtung eine Honoperation an der feingebohrten Kurbelwellenlagerbohrung durchführbar ist.

Mit dieser dem Transfer nachgeschalteten Honbearbeitung wird ein relativ hoher Abtrag erzielt. Bezogen auf den Durchmesser der Bohrung wird bei typischen Prozessen ein Aufmass von mindestens 80µm abgetragen, wobei das durch die Honbearbeitung abgetragene Aufmass häufig mehr als 100µm beträgt. In vielen Fällen liegt das durch Honen abgetragene Aufmass zwischen ca. 80 µm und ca. 110 µm, ggf auch bei bis zu 200 µm, selten darüber.

Zwischen der letzten Bearbeitungsstufe mit geometrisch bestimmten Schneiden und dem Beginn der Honbearbeitung findet kein Messschritt statt, das Werkstück wird direkt zur Honmaschine transferiert.

Im Folgenden werden zunächst verschiede Beispiele für konstruktive und verfahrensmäßige Varianten der Honbearbeitung beschrieben.

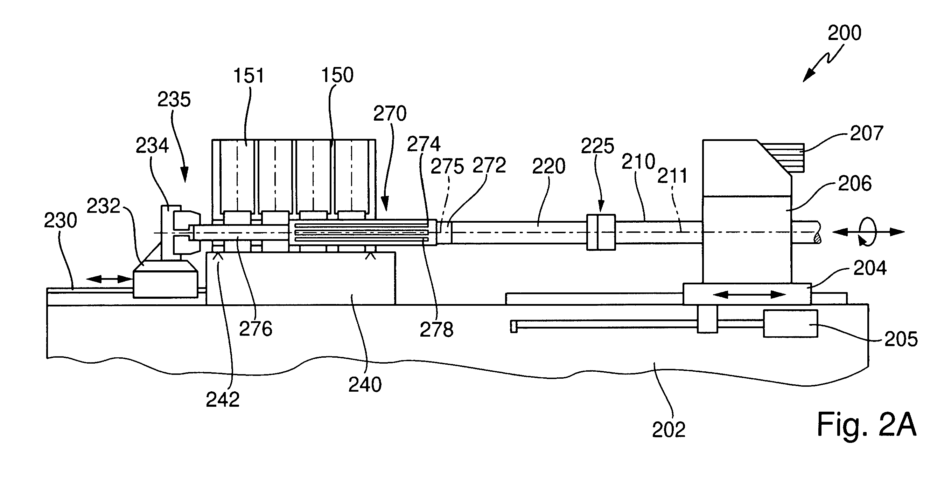

In Fig. 2A ist eine schematische Seitenansicht einer Ausführungsform einer Horizontal-Honmaschine 200 gezeigt, die in der Bearbeitungsanlage zum Honen von Kurbelwellenlagerbohrungen eingesetzt werden kann.

Die Honmaschine ist so ausgelegt, dass mit Hilfe des Fertigungsverfahrens Honen die Toleranzen hinsichtlich Durchmesser, Zylinderform und Oberflächenstruktur der Lagerstellen erzeugt werden können. Außerdem kann bei Bedarf die Koaxialität der miteinander fluchtenden Bohrungsabschnitte verbessert werden.

Auf einem Maschinenbett 202 der Honmaschine 200 ist ein horizontal verfahrbarer Spindelschlitten 204 montiert, der einen Spindelkasten 206 trägt, in welchem die Honspindel 210 der Honmaschine mit horizontaler Spindelachse 211 drehbar gelagert ist. Der elektrische Drehantrieb 207 für die Spindeldrehung ist auf dem Spindelkasten montiert. Der für die Hubbewegung parallel zur Spindelachse 211 erforderliche Hubantrieb 205 ist im Maschinenbett montiert und treibt eine horizontal ausgerichtete Gewindespindel an, auf der eine mit dem Spindelschlitten 204 gekoppelter Mutter läuft.

Der Hubantrieb ist für maximale Hubgeschwindigkeiten im Bereich von 40m/min oder 50 m/min oder mehr ausgelegt, der Drehantrieb für maximale Drehzahlen von etwa 2.500 U/min bis 3.000 U/min. Die verfügbare Antriebsleistung für Hub und Drehung liegt bei mehr als 10kW.

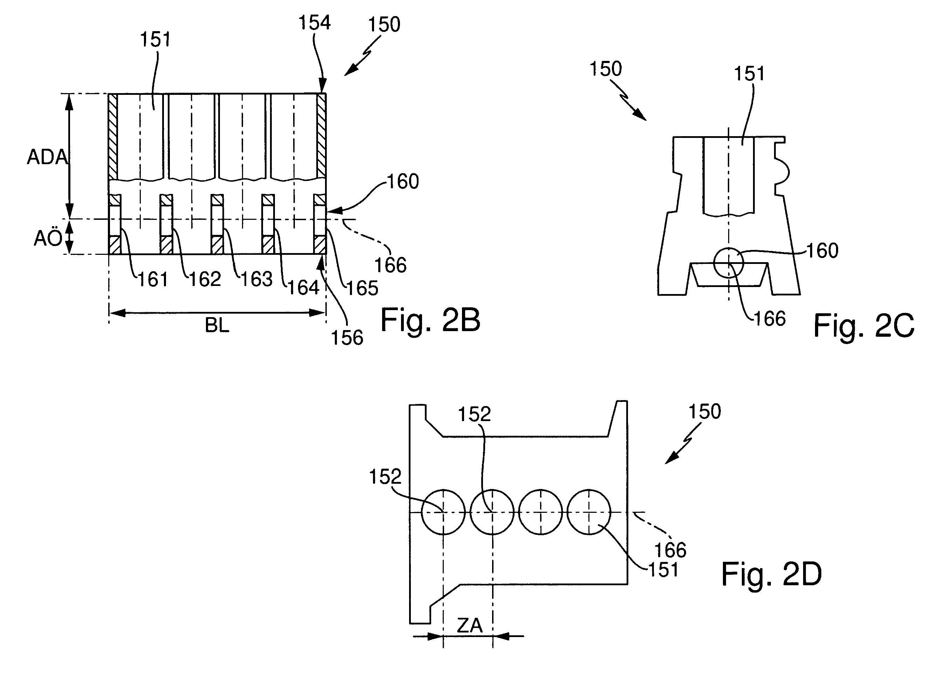

Das zu bearbeitende Werkstück 150 ist im Beispielsfall ein Zylinderkurbelgehäuse für einen Reihen-Vierzylindermotor (vgl. Fig. 2B bis 2D). Das Werkstück ist fest auf einen Werkstückhalter 240 montiert, der an der Oberseite des Maschinenbettes befestigt ist. Mit Hilfe eines maschinell oder manuell betätigbaren Stellantriebs ist der Werkstückhalter in einer horizontalen, senkrecht zur Spindelachse 211 (Z-Achse) verlaufenden Richtung (X-Richtung) horizontal verfahrbar. Das Werkstück liegt mit seiner ebenen Ölwannen-Anschlussfläche 156 auf dem Werkstückhalter auf und ist mit Hilfe von Indexierstiften 242 genau positioniert, so dass über die Position des Werkstückhalters 240 die exakte Position des Werkstückes relativ zur Spindelachse 211 festgelegt werden kann.

Die Ölwannen-Anschlussfläche 156 dient bei dieser Aufspannung als Fertigungsreferenzfläche zur Festlegung des werkstückfesten Koordinatensystems relativ zum maschinenfesten Koordinatensystem. Bei anderen Verfahrensvarianten dient die bereits vorher bearbeitete gegenüberliegende Deckfläche 154 (Anschlussfläche für den Zylinderkopf) als Fertigungsreferenzfläche.

An der spindelfernen Seite des Werkstückhalters ist auf dem Maschinenbett eine parallel zur Spindelachse 211 verlaufende, horizontale Linearführungseinrichtung 230 befestigt, auf der ein Schlitten 232 läuft, der ein Lagerelement 234 für ein drehbares Spannfutter 235 trägt, welches im Lagerelement um eine koaxial zur Spindelachse 211 verlaufende horizontale Achse drehbar gelagert ist. Das horizontal verfahrbare, drehbare Spannfutter 235 ist als Gegenhalter für das spindelferne Ende des Honwerkzeugs vorgesehen. Der Schlitten 232 ist im Beispielsfall mit dem Schlitten 204 des Hubantriebs mechanisch zwangsgekoppelt. Es ist auch möglich, dass die Bewegung des passiven Schlittens 232 ausschließlich über das bewegte Werkzeug erzeugt wird. Bei einer anderen Variante hat der Gegenhalter einen eigenen Antrieb, der mit dem Hubantrieb der Honspindel synchronisiert ist.

Das Honwerkzeug 270 ist mit Hilfe einer biegesteifen Antriebsstange 220 starr mit der Honspindel 210 verbunden. Hierzu ist die lösbare Kupplungsstruktur 225 zwischen Antriebsstange und Honspindel als drehfeste, biegesteife Starrkupplungsstruktur ausgebildet, beispielsweise in Form einer Schraubverbindung oder einer einfachen Flanschverbindung. Auch die lösbare Verbindung zwischen Antriebsstange 220 und Honwerkzeug 270 ist biegesteif und drehfest. Hierzu kann die spindelseitige Kopplungsstruktur 272 des Honwerkzeuges beispielsweise als Schraubgewinde ausgebildet sein, das mit einem entsprechenden Gegengewinde am werkzeugseitigen Ende der Antriebsspange zusammenwirkt.

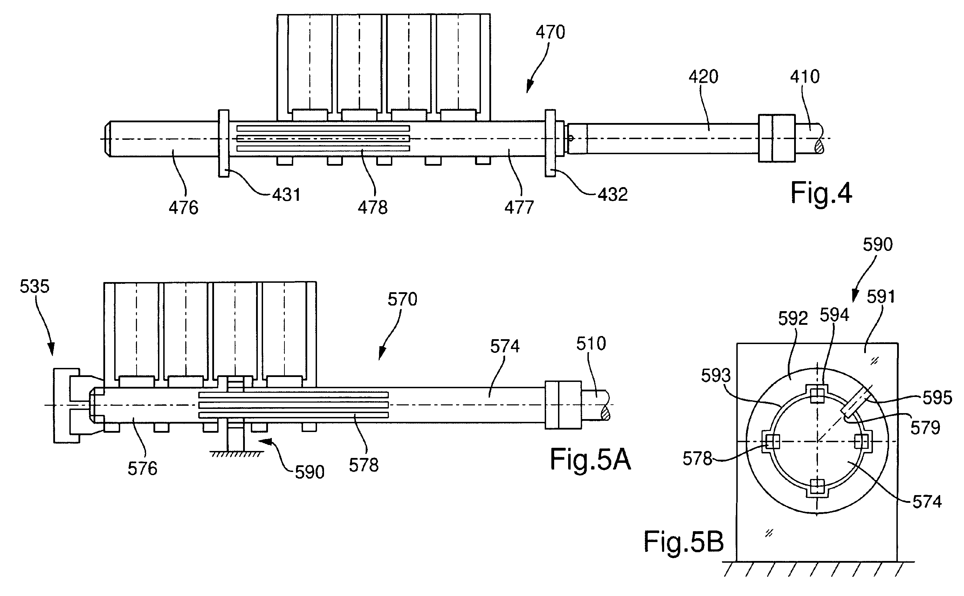

Bei anderen Ausführungsformen ist die spindelseitige Kupplungsstruktur des Honwerkzeuges direkt am werkzeugseitigen Ende der Honspindel befestigt, so dass ohne zwischengeschaltete Antriebsstange gearbeitet wird (vgl. Fig. 5B).

Das Honwerkzeug 270 hat einen langgestreckt-zylindrischen Werkzeugkörper 274, an dem spindelseitig die spindelseitige Kupplungsstruktur 272 und an der spindelabgewandten Seite ein zylindrischer Führungsschaft 276 ausgebildet sind. Die zentrisch im Werkzeugkörper verlaufende Werkzeugachse 275 ist aufgrund der starren Ankopplung koaxial mit der Spindelachse 211. In radialen Öffnungen des Werkzeugkörpers sitzen radial beweglich gelagerte Tragleisten, welche axial langgestreckte Schneidleisten 278 mit Diamant-Schneidbelag tragen. Eine radiale Zustellung der Schneidleisten dieses aufweitbaren Honwerkzeuges erfolgt mit Hilfe eines nicht näher dargestellten, elektromotorisch oder hydraulisch angetriebenen, formschlüssigen Zustellsystems, welches eine durch die Honspindel und die Antriebsstange in das Honwerkzeug verlaufende, axial verschiebbare Zustellstange umfasst, an deren Ende ein Aufweitkonus mit einfacher oder mehrfacher Unterstützung angeordnet ist, der mit konischen Gegenflächen an den Innenseiten der Tragleisten zusammenwirkt, um bei axialer Verschiebung der Zustellstange eine radiale Zustellung der Schneidleisten ohne Verkippung der Schneidleisten zu gewährleisten.

Die parallel zur Werkzeugachse gemessene Länge der Schneidleisten beträgt vorzugsweise mehr als 60%, gegebenenfalls sogar mehr als 70% und im Beispielsfall sogar etwas mehr als 80% der Länge der mit dem Honwerkzeug zu bearbeitenden Kurbelwellenlagerbohrung, was einerseits hohe Abtragsleistungen fördert und sich andererseits günstig auf die Geradheit der Bohrung bzw. die Koaxialität der bearbeiteten Lagerstege auswirkt.

Das spindelferne Ende des Führungsschafts 276 ist in der dargestellten Bearbeitungskonfiguration der Honmaschine in das drehbare Spannfutter 235 eingespannt. Dadurch ist die durch die Schneidleisten 276 gebildete einzige Schneidgruppe des Honwerkzeuges zwischen zwei die Lage der Werkzeugachse stabilisierenden Lagerstellen angeordnet. Eine der Lagerstellen wird durch die Lagerung der Honspindel 210 im Spindelkasten 206 gebildet, die gegenüberliegende Lagerstelle durch das auf dem Schlitten 232 montierte und mit dem Honwerkzeug axial verfahrbare Spannfutter 235, das als Gegenlager dient.

Einige Besonderheiten des Werkstücks 150 werden anhand von Fig. 2B bis D erläutert, wobei Fig. 2B einen Längsschnitt, Fig. 2C eine Draufsicht parallel zur Bohrungsachse der Kurbelwellenlagerbohrung und Fig. 2D eine Draufsicht parallel zu den Bohrungsachsen der Zylinderbohrungen zeigt. Für Motorblöcke und die daran ausgebildeten Funktionsflächen und Bohrungen gelten zum Teil sehr enge Toleranzen, um eine zuverlässige Funktion zu gewährleisten. Die Zylinderbohrungen 151 sind bezüglich Zylinderform und Durchmesser der Zylinderbohrung typischerweise im Bereich weniger Mikrometer toleriert, wobei auch ein besonders Augenmerk auf die Oberflächentopografie gelegt wird. Für den Abstand ZA der Bohrungsachsen 152 der Zylinderbohrungen, das sogenannte Stichmaß, gelten typischerweise Toleranzen im Bereich von 100 µm.

Eine etwas größere Formtoleranz als bei den Zylinderbohrungen haben die Lagerstellen für die Kurbelwelle im Bereich der Kurbelwellenlagerbohrung 160. Die Kurbelwellenlagerbohrung ist im Vergleich zur Zylinderbohrung (typisches Verhältnis von Länge zu Durchmesser maximal 2.5) eine relativ lange Bohrung, typischerweise mit einem Länge-Durchmesserverhältnis LDV, das wesentlich größer als 2.5 oder 3 ist und im Beispielsfall etwa 6 beträgt. Die Kurbelwellenlagerbohrung hat bei einem Vierzylinder-Reinmotor fünf Bohrungsabschnitte 161 bis 165, die miteinander fluchtend im gegenseitigen axialen Abstand zueinander in Reihe angeordnet sind. Die Bohrungsabschnitte bilden die Lagerstellen für die Kurbelwelle. Bei der Kurbelwellenlagerung ist insbesondere die Koaxialität dieser Lagerstellen zueinander wichtig. Die Lager sollen so gut wie möglich in einer Flucht liegen, damit die Kurbelwelle rund laufen kann und an allen Lagerstellen gleichmäßig aufliegt. Die Koaxialität der einzelnen Lagerstellen sollte 15µm nicht oder nicht wesentlich übersteigen. Zur Definition der "Koaxialität" wird auf die DIN ISO 1101 verwiesen, deren Inhalt insoweit zum Inhalt dieser Beschreibung gemacht wird.

Ein weiteres wichtiges Kriterium bezüglich der Kurbelwellenlagerbohrung ist die Position ihrer Bohrungsachse 166, die im Betrieb des Motors die Lage der Kurbelwellenachse definiert. Der Begriff "Position der Bohrungsachse" soll hier sowohl die absolute Position dieser Achse im Raum, als auch ihre Winkellage, d.h. ihre Orientierung im Raum, umfassen. Die vertikale Position kann z.B. durch den Abstand ADA der Bohrungsachse zur Deckfläche 154 des Motorblocks am Bohrungseintritt oder am Bohrungsaustritt (oder den entsprechenden Abstand AÖ zur Ölwannen-Anschlussfläche 156) definiert werden. Der Abstand zwischen Kurbelwelle und Deckfläche ist eines der Kriterien für die Verdichtung des Motors. Hier sind zwar Toleranzen im Mikrometerbereich in der Regel nicht erforderlich, erwünscht sind jedoch Toleranzen im Bereich weniger 100stel Millimeter. Die exakte Position der Kurbelwelle bzw. der Bohrungsachse der Kurbelwellenlagerbohrung zu den Zylinderbohrungen ist auch wichtig zur Verschleißminderung an den hochbelasteten Bauteilen, zu denen neben den Kolben/Kolbenbolzen, Pleuel und Pleuellagern auf der Kurbelwelle auch die Lagerungen der Kurbelwelle im Zylinderkurbelgehäuse zählen. Auch die Winkellage der Bohrungsachse 166, d.h. deren Orientierung in Bezug auf ein werkstückfestes Bezugssystem, spielt hierbei eine Rolle. Typischerweise sollte die Position der Bohrungsachse 166 bezogen auf die gesamte Bohrungslänge BL maximal 0.05mm variieren, wobei dieser Wert sowohl für die Vertikalrichtung (Richtung Deckfläche) als auch quer dazu (Horizontalrichtung in Fig. 2B) gilt.

Mit Hilfe der Honmaschine 100 ist es möglich, bei einem Motorblock unmittelbar nach der letzten mit einem Werkzeug mit geometrisch bestimmter Schneide ausgeführten Feinbearbeitungsoperation, z.B. nach einer Feinbohroperation oder einer Reiboperation, die Kurbelwellenlagerbohrung 160 mittels Honen so feinzubearbeiten, dass alle Toleranzen hinsichtlich der Koaxialität der Bohrungsachse und auch hinsichtlich der erforderlichen Oberflächenqualität der Lagerstellen erzielt werden können. Hierzu kann wie folgt vorgegangen werden.

Zunächst wird das von der Feinbohreinrichtung transferierte Zylinderkurbelgehäuse 150 ohne zwischengeschaltete Messoperation auf den richtig positionierten, sehr verwindungssteif ausgeführten Werkstückhalter 140 mit Hilfe der Indexierstifte 142 positionsgenau so aufgespannt, dass die Spindelachse 111 der Honspindel koaxial mit der gewünschten Sollposition der Bohrungsachse der Kurbelwellenlagerbohrung liegt. In der Regel wird diese Achslage zumindest in Bezug auf einige der zu bearbeitenden Bohrungsabschnitte nicht mittig, sondern exzentrisch liegen. Die Bohrungsabschnitte haben zudem in Bezug auf ihren Solldurchmesser ein Untermaß, das durch Honen abzutragen ist. Abhängig von der Qualität der Vorbereitung kann das Untermaß z.B. im Bereich von mindestens 0,1 mm liegen.

Nach Festspannen des Werkstückes wird das Honwerkzeug in die Kurbelwellenlagerbohrung von der spindelzugewandten Eintrittsseite so weit eingeführt, dass der spindelferne Endabschnitt des Führungsschafts 176 in das Spannfutter 135 eingeführt und dort festgeklemmt werden kann. Die Schneidleisten befinden sich in dieser Vorbereitungsphase in ihrer zurückgezogenen Position, so dass das starr an Honspindel und Antriebsstange gekoppelte Honwerkzeug von diesem ohne Berührung der Lagerstelleninnenseiten in die Kurbelwellenlagerbohrung teilweise eingeführt werden kann.

Danach werden der Hubantrieb, der Drehantrieb und der Antrieb des Zustellsystems für die Aufweitung der Schneidgruppe eingeschaltet. Um in relativ kurzen Taktzeiten einen gegebenenfalls erheblichen Materialabtrag zu erzielen, liegen die maximalen Hubgeschwindigkeiten und die maximalen Drehzahlen typischerweise deutlich über den entsprechenden Werten für die konventionelle Honbearbeitung, wie sie beispielsweise bei der Bearbeitung von Zylinderbohrungen üblich sind. Maximale Hubgeschwindigkeiten können mehr als 20 m/min oder mehr als 30 m/min bis beispielsweise etwa 40 m/min betragen, die maximalen Drehzahlen liegen typischerweise zumindest während einer Phase der Honbearbeitung bei mehr als 1.000 U/min oder darüber, wobei selten mehr als 2.500 U/min erforderlich sein werden.

Bei fortschreitender Aufweitung (Durchmesservergrößerung) des Honwerkzeuges werden dann durch das schnell drehende und schnell axial oszillierende Honwerkzeug zunächst die am weitesten innen liegenden Abschnitte der Lagerstellen durch die vielschneidigen Schneidleisten zerspant. Bei nicht völlig zentrierten Bohrungsabschnitten (z.B. bei innen liegenden Lagerstegen) kann es zunächst zu einem einseitigen Partialschnitt kommen, der nach und nach in einen über den gesamten Umfang eines Bohrungsabschnitts verlaufenden Vollschnitt übergeht. Dabei erhalten alle Bohrungsabschnitte allmählich eine zur Werkzeugachse 175 zentrierte, zylindrische Form, so dass sich die Koaxialität der Lagerstellen verbessert.

Die Schnittgeschwindigkeiten können im Bereich von 250 m/min oder darüber, beispielsweise bei mehr als 300 m/min oder mehr als 350 m/min oder mehr als 400 m/min liegen. Das erzielbare Zeitspanvolumen der Feinbearbeitung kann hierbei zumindest in der Endphase, wenn an allen Bohrungsabschnitten Material abgetragen wird, wesentlich höher liegen als bei konventionellen Honbearbeitungen, beispielsweise im Bereich von mehr als 200 mm³/s oder sogar mehr als 500 mm³/s oder darüber.

Zur Ermittlung des Zeitspanvolumens wird in dieser Anmeldung von einem spezifischen Zeitspanvolumen Q_{W}^{S} = V/t [mm³/s] ausgegangen, wobei V das durch Zerspanung abgetrennte Volumen des Werkstücks und t die dafür benötigte Bearbeitungszeit ist. Für das Volumen V gilt die Näherung V≈ (π (D² - d²) L) / 4, wobei d der (kleinere) Durchmesser der Bohrung vor dem Abtrag, D der (größere) Durchmesser nach dem Abtrag und L die Länge der bearbeiten Bohrung bzw. des im Durchmesser vergrößerten Bohrungsabschnitts ist. Das spezifische Zeitspanvolumen ist hier auf eine Bearbeitungszeit t = 20 s (entsprechend einer typischen Honzeit) und eine Länge L = 20 mm (entsprechend einer typischen Stegbreite eines einzelnen Lagerstegs einer Kurbelwellenlagerbohrung eines PKW-Motors) bezogen bzw. normiert. Die in Tabelle A (siehe Ende der Beschreibung) angegebenen Werte für das Zeitspanvolumen sind für typische nominelle Bohrungsdurchmesser von 40 mm bis 70 mm angegeben. In denjenigen Spalten, in denen die Anzahl der Stege gleich 1 ist, entsprechen die Werte dem spezifischen Zeitspanvolumen für die vier verschiedenen Durchmesser.

Für eine typische Kurbelwellenlagerbohrung eines Reihenvierzylinders mit 60 mm Durchmesser und 5 Lagerstegen (Bohrungsabschnitten) mit je 20 mm Länge ergibt sich z.B. ein Wert des Zeitspanvolumens von ca. 47 mm³/s (entsprechend einem Abtrag von 0.1 mm im Durchmesser), und ein Wert von 236 mm³/s entspricht einem Abtrag von 0.5 mm.

Häufig erreichte (Gesamt-)Zeitspanvolumina bei der Kurbelwellenlagerbohrungsbearbeitung mit typischen Bohrungsdurchmessern von ca. 40 mm bis ca. 70 mm liegen bei 5 Lagerstegen und einem Abtrag von ca. 0.2 mm im Bereich von ca. 60 mm³/s bis ca. 110 mm³/s. Dies ist eine signifikante Erhöhung gegenüber konventionellen Honverfahren.

Die hohe Antriebsleistung in Verbindung mit unkonventionell hohen Drehzahlen und Hubgeschwindigkeiten erlauben im Vergleich zum konventionellen Honen eine starke Erhöhung der Schnittgeschwindigkeit. Dadurch können die erforderlichen Abträge im Durchmesser innerhalb üblicher Honzeiten von beispielsweise 20 s bis 25 s erreicht werden, was einem Zeitspanvolumen von deutlich mehr als 200 mm³/s oder sogar mehr als 500 mm³/s entspricht. Die Prozessparameter der Honbearbeitung können somit so eingestellt werden, dass die Honzeiten für die Honbearbeitung im Bereich der Honzeiten der konventionellen Honbearbeitung einer Kurbelwellenlagerbohrung liegen, d.h. im Bereich von maximal 20 bis 25 Sekunden. Da durch die Honbearbeitung jedoch die früher notwendige vorgeschaltete Bohroperation eingespart werden kann, ist eine schnellere und damit wirtschaftlichere Feinbearbeitung von Kurbelwellenlagerbohrungen bei zumindest gleichbleibender Qualität möglich.

Durch die Honbearbeitung können regelmäßig Koaxialitäten von weniger als 30µm oder sogar weniger als 15µm erzielt werden. In Fällen nicht ausreichend gut vorbearbeiteter Werkstücke, wenn z.B. durch die mit bestimmten Schneiden durchgeführte Bearbeitung nur eine Genauigkeit der Bohrungsachsenposition von deutlich mehr als ± 20 µm erzielt werden konnte, könnte sogar eine aktive Positionsveränderung der Bohrungsachse der Kubelwellenlagerbohrung herbeigeführt werden, was aber in der Regel nicht nötig ist.

Um bei Bedarf z.B. die Koaxialität korrigieren zu können, ist bei der Honmaschine ein steifes und präzises Maschinenkonzept umgesetzt. So sind bei der Honspindel über die Schlittenführung der Spindel bis zur Werkstückaufnahme präzise und steife Einheiten vorgesehen, die mit entsprechenden Einheiten traditioneller Honmaschinen wenig gemeinsam haben. Beispielsweise ist die Honspindel bei konventionellen Honmaschinen typischerweise mit einfachen, nicht verspannten Schrägkugellagern gelagert. Demgegenüber sieht die Lagerung innerhalb des Spindelkastens 106 eine höherwertige Lagerung vor, die vorgespannt werden kann, also ein vorspannbares Radial/Axial-Lager.

Weiterhin wird mit vergleichsweise langen und schlanken Honwerkzeugen gearbeitet, die beim Bearbeiten exzentrisch liegender Bohrungsabschnitte gegebenenfalls hohen, einseitigen Abdrängkräften ausgesetzt sind. Die Position der Werkzeugachse bleibt auch unter diesen erschwerten Bedingungen stabil koaxial zur Sollposition der Bohrungsachse, da das Honwerkzeug auf der Spindelseite starr mit der Honspindel verbunden und auf der spindelabgewandten Seite am Gegenhalter 135 gegengelagert ist.

Im Ausführungsbeispiel von Fig. 2A ist eine mitfahrende Gegenlagerung vorgesehen, die durch den Hub des Spindelschlittens mitbewegt wird und daher keinen eigenen Antrieb benötigt (passiv mitbewegtes Gegenlager). Der Hub der Gegenlagerung kann beispielsweise im Bereich von 500 mm liegen. Alternativ kann auch eine feststehende Gegenlagerung vorgesehen sein, beispielsweise in Form einer fest auf dem Maschinenbett montierten Lagerbocks, in welchem eine koaxial zur Spindelachse 211 angeordnete, zylindrische Lageröffnung vorgesehen ist, durch die der zylindrische Führungsschaft 207 und 276 spielfrei und durch hydrodynamische Schmierung reibungsarm hindurchgeführt werden kann. Auch eine Kombination aus einer eingangsseitigen vorderen Führung und einer ausgangsseitigen hinteren Führung ist möglich (vgl. Fig. 4).

Die Honmaschine 200 ist als Horizontalmaschine aufgebaut, so dass eine Integration in automatisierte Fertigungslinien besonders einfach ist. Der Horizontalaufbau ist auch günstig für die Zugänglichkeit der Maschinenkomponenten und im Hinblick darauf, dass aufgrund der Gegenlagerung ein in Axialrichtung relativ langer Aufbau benötigt wird. Ein Aufbau als Vertikalmaschine, d.h. mit vertikal ausgerichteter Spindelachse, ist jedoch grundsätzlich möglich.

Die Honbearbeitung kann in der Regel in einer einzigen Bearbeitungsstufe mit einem einfach aufweitenden Honwerkzeug durchgeführt werden. Aufgrund der geforderten hohen Abtragsleistungen sind Schneidleisten mit Diamantschneidkörnern vorteilhaft, gegebenenfalls können aber auch andere harte Schneidkornmaterialien, wie Bornitrid, verwendet werden. Wird mit mittleren Korngrößen aus dem Bereich zwischen ca. 50 µm und ca. 100 µm bis 150 µm gearbeitet, so kann ein guter Kompromiss zwischen relativ hoher Abtragsleistung und einer ausreichend geringen Rauhigkeit der fertig bearbeiteten Innenflächen erzielt werden, für die häufig nur Restrauhigkeiten von weniger als ca. 15 µm R_{Z} (gemittelte Rauhtiefe) gefordert werden.

Insbesondere wenn geringere Restrauhigkeiten erwünscht sind, könnte auch in zwei aufeinanderfolgenden Stufen der Honbearbeitung gearbeitet werden, wobei die zweite Stufe mit feinerer Körnung arbeitet.

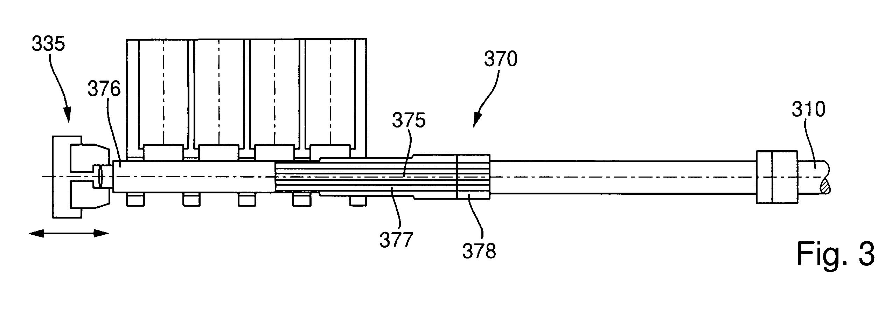

Bei der Ausführungsform in Fig. 3 wird zur Honbearbeitung einer Kurbelwellenlagerbohrung ein auf Sollmaß (Fertigmaß) voreingestelltes Honwerkzeug 370 verwendet, das ohne Zwischenschaltung einer starren Antriebsstange direkt an der Honspindel 310 starr befestigt ist. Ein spindelabgewandter, zylindrischer Führungszapfen 376 ist ähnlich wie bei der Ausführungsform von Fig. 2A in einem drehbaren Spannfutter eines passiv mit dem Honwerkzeug mitbewegbaren Gegenhalters 335 eingespannt, um entgegen eventuell einseitig einwirkender Abdrängkräfte bei der Honbearbeitung die Position der Werkzeugachse 375 stets an der gewünschten Sollposition der Bohrungsachse zu halten. Das Honwerkzeug 370 hat einen relativ langen konischen Schneidbereich 377 und einen spindelseitig unmittelbar daran anschließenden, im Wesentlichen zylindrischen Schneidbereich 378, dessen Außendurchmesser dem gewünschten Fertigmaß der Bohrungsabschnitte entspricht. Der Durchmesser des konischen Schneidbereichs nimmt vom spindelabgewandten Vorderende zum spindelzugewandten Ende mit einem Konuswinkel von einigen Graden kontinuierlich zu.

Die Schneidleisten im konischen Schneidbereich und im Kalibrierbereich sind zwar vor dem Einbau in die Honmaschine manuell einstellbar, eine Zustellung während des Honbetriebes, ist jedoch nicht vorgesehen und auch nicht nötig, so dass der konstruktive Aufwand für ein Zustellsystem entfallen kann. Da das Honwerkzeug durch die starre Ankopplung an der Honspindel und die Gegenhalterung an der spindelabgewandten Seite außerhalb der Bohrung hinsichtlich seiner Axialbewegung exakt geführt ist, benötigt das Honwerkzeug keine gegebenenfalls aufweitbaren Führungsleisten zur Abstützung innerhalb der Bohrung, so dass das Honwerkzeug eine relativ einfache Konstruktion haben kann.

Während beim konventionellen Honen mit aufweitbaren Honwerkzeugen viele Doppelhübe in Verbindung mit einer allmählichen Aufweitung des Honwerkzeuges benötigt werden, erfordert der gesamte Abtragsvorgang bei Verwendung solcher Dornhonwerkzeuge in der Regel nur einen Doppelhub oder wenige Doppelhübe. Die axiale Hubgeschwindigkeit ist typischerweise um den Faktor 5 bis 10 geringer als bei entsprechenden Honverfahren mit aufweitbaren Honwerkzeugen. Die axialen Hubgeschwindigkeiten können bei der Leistungshonbearbeitung beispielsweise im Bereich von 12 m/min oder mehr liegen. Aufgrund der hohen Spindeldrehzahlen, die bei dieser Bearbeitungsvariante bis zu 2500 U/min oder sogar bis 3000 U/min betragen können, in Verbindung der relativ dazu geringen Hubgeschwindigkeit werden die Bohrungsabschnitte bei Durchschieben des Honwerkzeuges allmählich nacheinander auf Fertigmaß gebracht und gleichzeitig gegebenenfalls hinsichtlich ihrer Lage korrigiert, so dass nach Abschluss von ein oder zwei Doppelhüben die Istposition aller Bohrungsabschnitte mit der durch die Werkzeugachse 375 vorgegebenen Sollposition übereinstimmt und die Innenflächen der Bohrungsabschnitte die gewünschte zylindrische Form und Oberflächenstruktur haben.

Die Fig. 4 und 5 zeigen weitere Möglichkeiten, ein im Vergleich zu seinem Durchmesser relativ langes Honwerkzeug mit einem langen Schneidleistenbereich in einer langen Bohrung, nämlich einer Kurbelwellenbohrung, zuverlässig und gegen Querkräfte stabil zu führen. Bei der Ausführungsform von Fig. 4 ist das langgestreckte Honwerkzeug 470 über eine begrenzt biegsame Antriebsstange 420 mit der Honspindel 410 verbunden. Auf der spindelnahen und der spindelfernen Seite der Schneidleisten 478 bildet der im Wesentlichen zylindrische Werkzeugkörper zylindrische Führungsschäfte, nämlich einen spindelabgewandten Führungsschaft 476 und eine spindelnahen Führungsschaft 477, an dessen freien Ende die Kopplungsstruktur zur Ankopplung an die Antriebsstange sitzt. Der spindelferne Führungsschaft ist in einer spindelfernen, an der Ausgangsseite des Werkstücks angeordneten hinteren Führungsbuchse 431 axial beweglich geführt. Der spindelzugewandte Führungsschaft 477 ist an der Eingangsseite des Werkstücks in einer entsprechend gestalteten vorderen Führungsbuchse 432 axial gleitbeweglich geführt. Die Mittenachsen der Führungsbuchsen legen die Lage und Orientierung der Werkzeugachse und damit auch Lage und Orientierung der fertig bearbeiteten Kurbelwellenlagerbohrung fest. Ein endseitiger Gegenhalter ist hier nicht erforderlich.

Bei der Ausführungsform von Fig. 5 ist das mit durchgehenden, langen Schneidleisten 578 ausgestattete Honwerkzeug 570 im Inneren des Werkstücks zwischen zwei axial benachbarten Lagerstegen mit Hilfe einer Werkzeuglagerung 590 radial unbeweglich sowie um die Werkzeugachse drehbar geführt. Die in Fig. 5A in einem Axialschnitt und in Fig. 5B in Draufsicht gezeigte "innere" Werkzeuglagerung 590 hat ein plattenförmiges Lagerelement 591, das an der Oberseite des Maschinenbetts befestigt ist. In einer zylindrischen Öffnung des Lagerelementes sitzt ein im Wesentlichen ringförmiges Führungselement 592, das mit Hilfe eines Wälzlagers gegenüber dem maschinenfesten Lagerelement 591 unbegrenzt drehbar gelagert ist. Das Führungselement 592 hat eine dem Außendurchmesser des Honwerkzeugs angepasste, axial durchgehende Führungsöffnung 593 zum Hindurchführen des Honwerkzeugs. Über den Umfang des Führungselementes sind an seiner Innenseite mehrere gleichmäßig über den Umfang verteilt radiale Ausnehmungen 594 vorgesehen, deren Anzahl der Anzahl der Schneidleisten entspricht und die so dimensioniert sind, dass die Schneidleisten auch bei maximaler Aufweitung des Honwerkzeugs in die Ausnehmungen hineinpassen, ohne das Führungselement zu berühren. Am ringförmigen Führungselement 592 ist ein Mitnehmerelement 595 befestigt, das über den Innenumfang des ringförmigen Teils des Führungselementes nach innen in die ansonsten weitgehend kreisförmige Durchlassöffnung 593 hineinragt. Der nach innen ragende Abschnitt ist so dimensioniert, dass er in Umfangsrichtung im Wesentlichen spielfrei in eine am Werkzeugkörper 574 des Honwerkzeuges vorgesehene Längsnut 579 hineinpasst, die sich über die gesamte Länge des Werkzeugkörpers mittig zwischen zwei in Umfangsrichtung benachbarten Schneidleisten parallel zur Werkzeugachse erstreckt.

Vor Beginn der Honbearbeitung wird das direkt starr an der Honspindel 510 befestigte Honwerkzeug 570 von der Eingangsseite in die Kurbelwellenlagerbohrung hineingeschoben und durchtritt dabei zunächst mit seinem spindelfernen Führungsschaft 576 die Führungsöffnung 593 der inneren Werkzeuglagerung 590. Die relative Drehposition von Honwerkzeug und drehbarem Führungselement 592 ist dabei so gewählt, dass der nach innen ragende Abschnitt des Mitnehmerelements 595 schon im Bereich des spindelfernen Führungsschafts in die Längsnut 579 weitgehend spielfrei eingefädelt wird. Dadurch wird für die weitere Einführung des Honwerkzeugs sichergestellt, dass die Schneidleisten 578 ohne Berührung des Führungsringes 592 durch diesen hindurchgeführt werden können. Ist das Honwerkzeug weit genug eingeführt, wird das freie Ende des Führungsschafts 576 in den Gegenhalter 535 eingespannt. Während der Honbearbeitung bewegt sich das Honwerkzeug entsprechen der axialen Hubbewegung in der Führungsöffnung 593 hin und her, während gleichzeitig durch die Drehung des Honwerkzeuges über das Mitnehmerelement 595 das ringförmige Führungselement innerhalb des Lagerelements gedreht wird. Hierdurch ist eine zuverlässige Abstützung des Honwerkzeuges innerhalb des Werkstückes sichergestellt, so dass eine Durchbiegung des langen Honwerkzeuges auch bei starken Radialkräften weitestgehend vermieden wird. Da das drehbare Führungselement 592 passiv ist, d.h. keinen eigenen Antrieb hat, sondern über die Bewegung des Honwerkzeuges mitgenommen wird, ist eine solche Lösung relativ kostengünstig und gleichzeitig sehr robust und betriebssicher.

Eine solche, in einen Zwischenraum zwischen axial benachbarten Bohrungsabschnitten positionierbare "innere Führung" kann auch bei anderen Ausführungsbeispielen, beispielsweise bei der in Fig. 2A gezeigten Ausführungsform realisiert sein. Es können auch zwei oder mehr innere Führungen vorgesehen sein. Auf eine endseitige Gegenlagerung kann ggf. verzichtet werden, insbesondere wenn im letzten endseitigen Lagersteg-Zwischenraum eine innere Führung angebracht ist.

Bei einer Verfahrensvariante ist als Besonderheit noch vorgesehen, dass an dem für die Honoperation an der Honmaschine eingespannten und lagerichtig fixierten Werkstück von derjenigen Seite, die für die spätere Befestigung des Getriebes vorgesehen ist (Getriebeseite) und/oder an der gegenüberliegenden Stirnseite (Steuerseite), noch eine oder mehrere Indexbohrungen fertigbearbeitet werden. Hierzu können an der Honmaschine zusätzlich zur Honspindel z.B. zwei gesonderte Bearbeitungsspindeln vorgesehen sein, an die jeweils ein Reibwerkzeug starr angekoppelt werden kann. Indexbohrungen für den lagerichtigen Getriebeanschluss oder den Anschluss anderer Komponenten werden herkömmlich nach Abschluss des Feinbohrens und vor dem Honen auf der für das Feinbohren vorgesehenen Maschine erzeugt. Hierzu werden am Werkstück bereits vorhandene, grob vorbearbeitete Bohrungen mit geringer Lagetoleranz (typischerweise ± 5/100 mm) in Bezug auf die Bohrungsachse der Kurbelwellenlagerbohrung endbearbeitet, z.B. durch eine Reiboperation. Diese Bearbeitungsoperation kann nun auf die Seite des Honens verlagert werden, um die Fertigbearbeitung der Indexbohrungen und die Honbearbeitung in einer gemeinsamen Aufspannung parallel entweder zeitgleich (parallel) oder nacheinander durchzuführen. Die Indexbohrungen können somit mit besonders hoher Präzision in Bezug auf die Ausrichtung der Kurbelwellenlagerbohrung fertig bearbeitet werden, da zwischen der letzten Material abtragenden Bearbeitungsoperation an der Kurbelwellenlagerbohrung (Honen) und der Endbearbeitung der Indexbohrungen das Werkstück nicht mehr umgespannt werden muss.

Die Kurbelwellenlagerbohrung ist ein typisches Beispiel einer relativ langen Bohrung, d.h. einer Bohrung mit einer im Vergleich zum Bohrungsdurchmesser relativ großen Axiallänge. "Lange Bohrungen" im Sinne dieser Anmeldung haben typischerweise ein Länge-DurchmesserVerhältnis LDV von deutlich mehr als 2.5 oder 3, wobei LDV z.B. mehr als 4 oder mehr als 6 oder mehr als 8 betragen kann. Demgegenüber haben "kurze Bohrungen, wie beispielsweise Zylinderbohrungen in Verbrennungsmotoren, typische Länge-Durchmesser-Verhältnisse LDV von maximal 2.5. Die in dieser Anmeldung beschriebenen Vorrichtungen und Verfahren sind besonders für die Bearbeitung langer Bohrungen optimiert, können jedoch grundsätzlich auch bei kurzen Bohrungen genutzt werden.

Im Folgenden werden einige Beispiele bevorzugter Varianten von Bearbeitungsoperationen mit Hilfe von Werkzeugen mit geometrisch bestimmten Schneiden beschrieben.

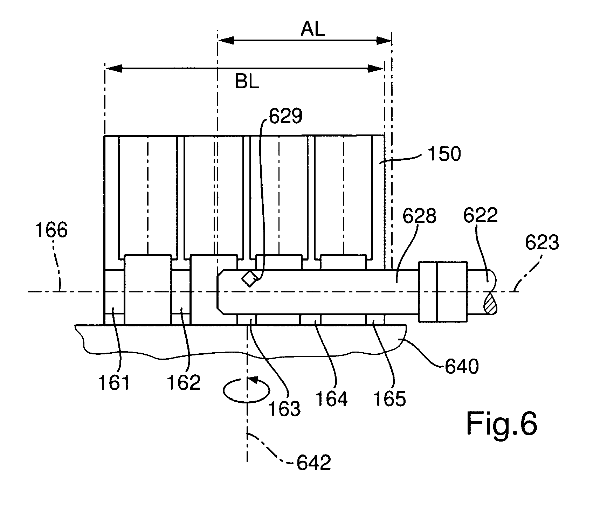

Fig. 6 zeigt ein Zylinderkurbelgehäuse 150, das für die letzte Feinbearbeitungsoperation mit geometrisch bestimmter Schneide auf einem Werkstückhalter 640 aufgespannt ist, der um eine vertikale Werkstückhalter-Drehachse 642 unbegrenzt gedreht werden kann. Das Werkstück ist mit Hilfe von Indexiereinrichtungen in einer vorgegebenen Position auf den Werkstückhalter fixiert. Der Werkstückhalter ist Teil einer Feinbohreinrichtung, die eine Feinbohrspindel 622 hat, deren Drehachse 623 horizontal und senkrecht zur Werkstückhalter-Drehachse 642 verläuft. Die Feinbohrspindel kann mit Hilfe des Spindelantriebs horizontal bewegt und um die Spindelachse 623 gedreht werden.

An das freie Ende der Feinbohrspindel 622 ist ein Feinbohrwerkzeug 628 starr angekoppelt. Am Umfang des Werkzeugkörpers des Feinbohrwerkzeugs sind ein oder mehrere aus Hartmetall bestehende Schneidplatten angeordnet, von denen nur eine Schneidplatte 629 dargestellt ist.

Das Feinbohrwerkzeug 628 ist als Kurzwerkzeug ausgebildet, welches eine Bearbeitungslänge AL hat, die wesentlich kürzer als die Bohrungslänge BL der Kurbelwellenlagerbohrung ist. Im Beispielsfall beträgt die Bearbeitungslänge ca. 60 bis 70% der Bohrungslänge. Aufgrund der starren Ankopplung an die Feinbohrspindel und der geringen Auskragung ist das Feinbohrwerkzeug bei dieser Anordnung sehr stabil gegen Querkräfte und bewegt sich beim Vorschub parallel zur Spindelachse 623 im Wesentlichen koaxial zu dieser, ohne dass eine substantielle seitliche Abdrängung quer zur Drehachse erfolgt.

Die Kurbelwellenlagerbohrung 160 hat bei dem gezeigten Zylinderblock für einen Vierzylinder-Reinmotor insgesamt fünf Bohrungsabschnitte, die die Lagerstellen für die Kurbelwelle bilden, nämlich einen ersten Bohrungsabschnitt 161, einen zweiten Bohrungsabschnitt 162, einen dritten Bohrungsabschnitt 163, einen vierten Bohrungsabschnitt 164 und einen fünften Bohrungsabschnitt 165.

Bei der beispielhaft gezeigten zweiseitigen Bearbeitung wird das Werkstück 150 zunächst in die gezeigte erste Drehposition gebracht, in der das Bohrungsende mit dem fünften Bohrungsabschnitt 165 der Feinbohrspindel 622 zugewandt ist. Für die Bearbeitung wird die Position des Werkstücks so eingestellt, dass die Spindelachse 623 und die damit fluchtende Rotationsachse des Feinbohrwerkzeugs koaxial mit der Sollposition der Bohrungsachse 166 liegen. Dann wird das Feinbohrwerkzeug in Rotation versetzt und langsam in Richtung Werkstück vorgeschoben, so dass nacheinander zunächst der fünfte Bohrungsabschnitt 165, dann der vierte Bohrungsabschnitt 164 und schließlich der dritte Bohrungsabschnitt 162 mittels Feinbohren bearbeitet werden (dargestellte Bearbeitungssituation). Die ersten beiden Bohrungsabschnitte 161 und 162 an der der Spindel abgewandten Seite bleiben bei dieser Bearbeitungsstufe unbearbeitet.

Anschließend wird das Feinbohrwerkzeug aus der Bohrung herausgezogen und das Werkstück wird um 180° um die Werkstückhalter-Drehachse 642 gedreht.

Danach wird das Rotationswerkzeug von derjenigen Bohrungsseite eingeführt, die mit dem ersten Bohrungsabschnitt 161 beginnt. Das Feinbohrwerkzeug wird dabei wieder koaxial zur Bohrungsachse 166 vorgeschoben, bis der erste und der zweite Bohrungsabschnitt ebenfalls bearbeitet sind. Danach wird das Feinbohrwerkzeug wieder aus der Bohrung zurückgezogen und die zweiseitige Bearbeitungsoperation ist abgeschlossen.

Bei dieser zweiseitigen Bearbeitung werden regelmäßig zumindest die Positionen der endseitigen Bohrungsabschnitte, nämlich des ersten Bohrungsabschnitts 161 und des fünften Bohrungsabschnitts 165, mit hoher Genauigkeit präzise zur gewünschten Lage der Bohrungsachse 166 positioniert sein. Bei den weiter innen liegenden Bohrungsabschnitten können sich eventuell kleine Abweichungen dadurch ergeben, dass das Feinbohrwerkzeug im Laufe des axialen Vorschubs etwas zur Seite gedrängt wird.

Da die "Position der Bohrungsachse" durch die Lage der eintrittsseitigen und austrittsseitigen Lagerstellen bestimmt ist, ist die Position der Bohrungsachse bei der zweiseitigen Bearbeitung mit hoher Zuverlässigkeit exakt einzustellen. Gegebenenfalls kann die Koaxialität noch außerhalb der Toleranzen liegen, weil die innen liegenden Stege noch nicht ihre exakte Position haben.

Die Koaxialität kann durch die nachgeschaltete Honoperation korrigiert und damit in den Toleranzbereich gebracht werden.

In dem in Fig. 6 gezeigten Beispielsfall wird die letzte Feinbearbeitungsoperation mit geometrischen Schneiden nach Art einer Semi-Finishbearbeitung mit typischen Materialabträgen zwischen 0.4 mm und 0,5 mm ausgelegt. Der Rest des Gesamtabtrags wird dann durch Honen geleistet.

Auch bei Verwendung eines Reibwerkzeugs für die letzte Feinbearbeitungsoperation mit geometrisch bestimmten Schneiden kann eine entsprechende zweiseitige Bearbeitung vorteilhaft sein, wobei dann das Kurzwerkzeug als Reibwerkzeug ausgestaltet ist, welches innerhalb des bereits durch Reiben bearbeiteten Bohrungsabschnitts durch werkzeugseitige Führungselemente radial geführt wird.

Eine entsprechende zweiseitige Bearbeitung mit größerem Materialabtrag ist bei manchen Ausführungsformen auch bei einer der letzten Feinbearbeitungsoperation mit geometrisch bestimmten Schneiden vorgeschalteten Egalisierungsoperation vorgesehen, bei der mittels geometrisch bestimmter Schneiden die Kurbelwellenlagerbohrung unmittelbar nach Montage des Lagerdeckels, also nach der Vorbereitung der Kurbelwellenlagerbohrung, mit relativ hohem Materialabtrag bearbeitet wird, um eventuelle aus dem Zusammenbau resultierende Ungleichmäßigkeiten zu reduzieren. Typische maximale Abträge der Egalisierungsoperation liegen bei bevorzugten Ausführungsformen im Bereich zwischen ca. 1 mm und ca. 2 mm, bezogen auf den Durchmesser.

Die verschiedenen, hier beispielhaft genannten Feinbearbeitungsoperationen können zu unterschiedlichen Prozessketten kombiniert werden. Bei einer Variante findet zunächst eine zweiseitige Egalisierungsoperation mit Hilfe eines geeignet stark abtragenden Feinbohrwerkzeugs statt. Als letzte Feinbearbeitungsoperation mit geometrisch bestimmten Schneiden vor dem Transfer des Werkstücks zur Honeinrichtung wird der anhand von Fig. 6 erläuterte zweiseitige Semi-Finish-Schnitt nachgeschaltet. Bei einer Variante dieses Verfahrens wird anstelle des für den Semi-Finish-Schnitt verwendeten Feinbohrwerkzeuges ein Reibwerkzeug mit Führung verwendet. Nach dem Transfer schließt sich in beiden Varianten eine Honoperation an, die bevorzugt als Dornhonoperation (vgl. Fig. 3 und zugehörige Beschreibung) ausgeführt wird.

Bei einer anderen Verfahrensvariante wird eine Egalisierungsoperation auf einer Sondermaschine durchgeführt. Der Egalisierungsschritt kann z.B. je nach Taktzeit auf einer eigenen Station mit gegengelagerten Bohrstangen oder kombiniert mit einer Semi-Finishbearbeitung mit einer gegengelagerten Bohrstange durchgeführt werden. Wenn der Egalisierungsschritt auf einer gesonderten Maschine durchgeführt wird, kann danach, ebenfalls auf einer Sondermaschine, eine Semi-Finish-Feinbohroperation mit einem gegengelagerten Feinbohr-Gruppenwerkzeug durchgeführt werden, bei dem für jeden zu bearbeitenden Bohrungsabschnitt eine eigene Schneidgruppe mit einer oder mehreren geometrisch bestimmten Schneiden vorgesehen ist. Auch hier schließt sich nach dem Transfer zur Honeinrichtung eine Honoperation an, die bevorzugt als Dornhonoperation ausgelegt ist.

Das Feinbearbeitungsverfahren und die hierfür verwendeten Vorrichtungen bieten Potential für erhebliche Verkürzungen der Prozesskette beim Feinbearbeiten von Kurbelwellenlagerbohrungen.

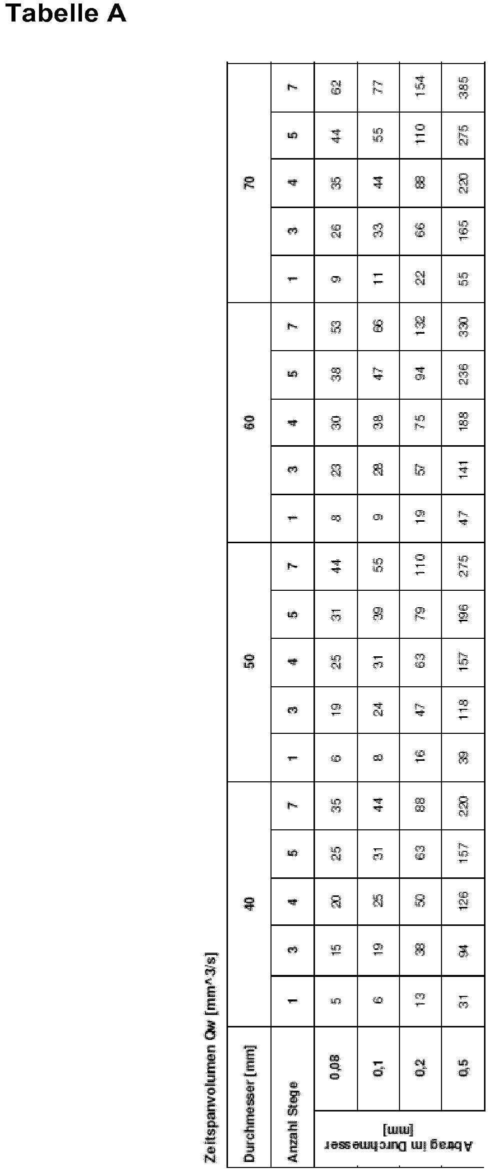

## Patentansprüche

1. Verfahren zum Feinbearbeiten einer Kurbelwellenlagerbohrung in einem Zylinderkurbelgehäuse einer Brennkraftmaschine, bei dem ausgehend von einer vorbereiteten Kurbelwellenlagerbohrung eine fertig bearbeitete Kurbelwellenlagerbohrung mit einem vorgebbaren Sollmaß, einer vorgebbaren Sollstruktur der Bohrungsinnenfläche und einer vorgebbaren Sollposition der Bohrungsachse erzeugt wird, wobei die vorbereitete Kurbelwellenlagerbohrung zunächst mit mindestens einem Feinbearbeitungswerkzeug mit geometrisch bestimmter Schneide feinbearbeitet wird und anschließend eine Honbearbeitung der Kurbelwellenlagerbohrung durchgeführt wird,
**dadurch gekennzeichnet,**
**dass** bei einer der Honbearbeitung unmittelbar vorgeschalteten letzten Feinbearbeitungoperation mit geometrisch bestimmter Schneide ein Aufmass von mindestens 0.4 mm abgetragen wird, und
**dass** das Honwerkzeug koaxial zur Sollposition der Bohrungsachse in die Bohrung eingeführt und innerhalb der Bohrung bewegt wird, wobei bei der Honbearbeitung ein Aufmass von mindestens 0.08 mm abgetragen wird.

2. Verfahren nach Anspruch 1, worin das Werkstück nach der letzten Feinbearbeitungoperation mit geometrisch bestimmter Schneide ohne Zwischenschaltung einer Messoperation gehont wird.

3. Verfahren nach Anspruch 1 oder 2, worin das Honwerkzeug bei der Honbearbeitung radial geführt wird, wobei eine radiale Führung insbesondere dadurch erreicht wird, dass
(i) das Honwerkzeug mit einer spindelseitigen Kupplungsstruktur starr an eine Honspindel oder an eine starr mit der Honspindel gekoppelte Antriebsstange angekoppelt und an mindestens einer mit axialem Abstand von der Kupplungsstruktur angeordneten Lagerstelle geführt wird, wobei zwischen der Kupplungsstruktur und der Lagerstelle mindestens eine Schneidgruppe des Honwerkzeugs angeordnet ist, und/oder
(ii) ein spindelferner Endabschnitt des Honwerkzeugs an einer der Eintrittseite der Bohrung gegenüber liegenden Austrittsseite in einem Gegenhalter drehbar gelagert wird, wobei der Gegenhalter vorzugsweise bei einer axialen Hubbewegung des Honwerkzeugs mit dem Honwerkzeug mitbewegt wird,
und/oder
(iii) das Honwerkzeug einen spindelnahen Führungsabschnitt und einen spindelfernen Führungsabschnitt hat, wobei der spindelnahe Führungsabschnitt an einer Eingangsseite des Werkstücks in einer vorderen Führungseinrichtung axial beweglich geführt ist und der spindelferne Führungsabschnitt in einer spindelfernen, an der Ausgangsseite des Werkstücks angeordneten hinteren Führungseinrichtung axial beweglich geführt ist.
und/oder
(iv) das Honwerkzeug an mindestens einer Position zwischen zwei benachbarten Bohrungsabschnitten geführt und gegen Radialkräfte abstützt wird.

4. Verfahren nach einem der vorhergehenden Ansprüche, worin das Werkstück in einer Werkstückposition fixiert wird und das Honwerkzeug koaxial zur Sollposition der Bohrungsachse in die Bohrung eingeführt und innerhalb der Bohrung bewegt wird.

5. Verfahren nach einem der vorhergehenden Ansprüche, bei der Honbearbeitung an einem oder mehreren Bohrungsabschnitten ein Abtrag von mindestens 100 µm erzeugt wird, wobei der Abtrag insbesondere zwischen 100 µm und 200 µm liegt.

6. Verfahren nach einem der vorhergehenden Ansprüche, worin während der Honbearbeitung mindestens phasenweise Material mit einem spezifischen Zeitspanvolumen von mehr als 13 mm³/s, insbesondere von mehr als 20 mm³/s durch Zerspanung abgetragen wird.

7. Verfahren nach einem der vorhergehenden Ansprüche, worin das Honwerkzeug während der Honbearbeitung mindestens phasenweise mit einer Drehzahl von mehr als 400 U/min gedreht wird, wobei die Drehzahl vorzugsweise mindestens phasenweise mehr als 1000 U/min, insbesondere mehr als 1500 U/min beträgt, und/oder worin das Honwerkzeug während der Honbearbeitung mindestens phasenweise mit einer maximalen Hubgeschwindigkeit von mehr als 12 m/min bewegt wird, wobei die maximale Hubgeschwindigkeit vorzugsweise mindestens phasenweise mehr als 20 m/min, insbesondere zwischen 30 m/min und 40 m/min beträgt.

8. Verfahren nach einem der vorhergehenden Ansprüche, worin bei der Honbearbeitung ein Honwerkzeug verwendet wird, das mehrere um einen Werkzeugkörper verteilte Schneidleisten aufweist und eine Länge der Schneidleisten mehr als das Dreifache, insbesondere mehr als das Vierfache des wirksamen Durchmessers des Honwerkzeugs beträgt und/oder worin bei der Honoperation ein Honwerkzeug mit Schneidmitteln verwendet wird, die mittlere Korngrößen aus dem Bereich zwischen ca. 50 µm und ca. 150 µm haben.

9. Verfahren nach einem der vorhergehenden Ansprüche, worin als letzte Feinbearbeitungsoperation mit geometrisch bestimmter Schneide eine Reiboperation mittels eines Reibwerkzeugs oder eine Feinbohroperation mittels eines Feinbohrwerkzeugs durchgeführt wird.

10. Verfahren nach einem der vorhergehenden Ansprüche, worin die letzte Feinbearbeitungsoperation mit geometrisch bestimmter Schneide als zweiseitige Bearbeitung ausgelegt ist, wobei von jedem Bohrungsende der Kurbelwellenlagerbohrung ein Kurzwerkzeug eingeführt wird, das eine Bearbeitungslänge hat, die kürzer als die Bohrungslänge der Kurbelwellenlagerbohrung ist, wobei vorzugsweise bei der zweiseitigen Bearbeitung das Werkstück zwischen einer ersten Bearbeitung und einer zweiten Bearbeitung mit dem Kurzwerkzeug um 180° gedreht wird.

11. Verfahren nach Anspruch 10, worin das Kurzwerkzeug ein Feinbohrwerkzeug oder ein Reibwerkzeug ist.

12. Verfahren nach einem der Ansprüche 1 bis 9, worin die letzte Feinbearbeitungsoperation mit geometrisch bestimmter Schneide mittels eines Gruppenwerkzeugs durchgeführt wird, bei dem an einem Werkzeugkörper mehrere mit axialem Abstand zueinander angeordnete Schneidgruppen zur gleichzeitigen Bearbeitung mehrerer in axialem Abstand zueinander angeordneter Bohrungsabschnitte der Kurbelwellenlagerbohrung angeordnet sind, wobei vorzugsweise ein spindelferner Endabschnitt des Gruppenwerkzeugs an einer der Eintrittseite der Kurbelwellenlagerbohrung gegenüber liegenden Austrittsseite in einem Gegenhalter drehbar gelagert wird, wobei der Gegenhalter insbesondere bei einer axialen Hubbewegung des Gruppenwerkzeugs mit dem Gruppenwerkzeug mitbewegt wird.

13. Bearbeitungsanlage zum Feinbearbeiten einer Kurbelwellenlagerbohrung in einem Zylinderkurbelgehäuse einer Brennkraftmaschine, mit mindestens einer Bearbeitungsmaschine mit einer Bearbeitungsspindel, an die ein Feinbearbeitungswerkzeug mit geometrisch bestimmter Schneide angekoppelt oder ankoppelbar ist,
sowie mit einer Honmaschine mit einer durch einen Spindelantrieb antreibbaren Honspindel, an die ein Honwerkzeug angekoppelt oder ankoppelbar ist,
**dadurch gekennzeichnet, dass** die Bearbeitungsanlage zur Durchführung des Verfahrens nach einem der vorhergehenden Ansprüche konfiguriert ist.

14. Bearbeitungsmaschine nach Anspruch 13, worin im Werkstückfluss zwischen der Bearbeitungsmaschine und der Honmaschine keine gesonderte Messstation angeordnet ist.
